# EUROPÄISCHE PATENTSCHRIFT

(11) **EP 0 703 935 B1**
(45) Veröffentlichungstag und Bekanntmachung des Hinweises auf die Patenterteilung: **06.02.2002**
(21) Anmeldenummer: 95915879.1
(22) Anmeldetag: 14.04.1995
(51) Int. Cl.: C08G 18/08, C08G 18/12, C08G 18/28, C08G 18/38, C08G 18/50, C09D 175/04

(54) **VERWENDUNG WÄSSRIGER ÜBERZUGSMITTEL, ENTHALTEND EINE WÄSSRIGE DISPERSION VON SILOXANBRÜCKEN ENTHALTENDEN POLYURETHANEN**
USE OF AQUEOUS COATINGS, CONTAINING AN AQUEOUS DISPERSION OF POLYURETHANES CONTAINING SILOXANE BRIDGES
UTILISATION DE DISPERSIONS AQUEUSES DE POLYURETHANES CONTENANT DES PONTS SILOXANE COMME AGENTS DE RECOUVREMENT

(30) Priorität: 19.04.1994 DE 4413562
(43) Veröffentlichungstag der Anmeldung: 03.04.1996
(73) Patentinhaber: E.I. DU PONT DE NEMOURS AND COMPANY, Wilmington Delaware 19898 (US)
(72) Erfinder: VOGT-BIRNBRICH, Bettina, D-42719 Solingen (DE); PATZSCHKE, Hans-Peter, D-42279 Wuppertal (DE); LENHARD, Werner, D-42289 Wuppertal (DE); DÖBERT, Jürgen, D-45549 Sprockhövel (DE); BRUNNER, Marcus, D-42283 Wuppertal (DE)
(74) Vertreter: Gille Hrabal Struck Neidlein Prop Roos
(86) Internationale Anmeldenummer: EP9501411
(87) Internationale Veröffentlichungsnummer: WO9528429

(56) Entgegenhaltungen:
- EP-A- 0 163 214
- EP-A- 0 315 006
- US-A- 3 941 733

## Beschreibung

Die Erfindung betrifft die Verwendung wäßriger Polyurethandispersionen (PU-Dispersionen) zur Herstellung von Mehrschichtlackierungen.

Eine Vielzahl von verschiedenartig kettenverlängerten Polyurethandispersionen ist bekannt geworden. Wegen ihrer hervorragenden Eigenschaften haben sie unter anderem technische Anwendung gefunden als Bindemittel in Wasserbasislacken.

So beschreiben beispielsweise die EP-A-0 089 497, EP-A-0 228 003, DE-A-36 28 124 und die EP-A-0 512 524 Wasserbasislacke, die als Bindemittel wäßrige Polyurethandispersionen enthalten, die durch Kettenverlängerung isocyanatfunktioneller Prepolymerer mit Polyamin und/oder Polyol hergestellt werden können.

Die DE-A-39 15 459 liefert Beispiele für Wasserbasislacke, die als Bindemittel wäßrige Polyurethandispersionen enthalten, die durch Kettenverlängerung isocyanatfunktioneller Prepolymerer mit Wasser hergestellt werden können.

Beispiele für Wasserbasislacke auf Basis von wäßrigen Polyurethandispersionen, die durch Kettenverlängerung von gegenüber Polyisocyanaten reaktiven, aktiven Wasserstoff enthaltenden PU-Prepolymeren mit Polyisocyanaten hergestellt werden können, findet man in DE-A-39 03 804 und DE-A-40 01 841.

Unter Verwendung der auf Basis bekannter Polyurethandispersionen formulierten Wasserbasislacke hergestellte Mehrschichtlackierungen sind verbesserungsbedürftig hinsichtlich ihrer Beständigkeit gegen Schwitzwasser. Werden die bekannten Polyurethandispersionen als Alleinbindemittel in wäßrigen Effektbasislacken eingesetzt, so ist die Effektausbildung im Vergleich zu mindestens ein weiteres Cobindemittel enthaltenden wäßrigen Effektbasislacken weniger günstig.

Die EP-A-0 163 214 beschreibt wäßrige selbstvernetzbare Polyurethandispersionen mit bevorzugt lateralen Silikonatgruppen. Die Herstellung und Lagerung der PU-Dispersionen erfolgt unter Bedingungen, die eine Reaktion der Silikonatgruppen untereinander bewußt verhindert. Nach der Applikation vernetzen die Bindemittel durch Kondensation der Silikonatgruppen unter Ausbildung von Siloxanbrücken.

Weitere wäßrige Lösungen oder Dispersionen von Polyurethanen mit zur Vernetzung geeigneten reaktiven Silikonatgruppen sind aus der EP-A-0 315 006 bekannt. Die dort beschriebenen Bindemittel werden durch die Reaktion von Isocyanatgruppen von Isocyanatprepolymeren mit Aminogruppen aufgebaut, d. h. es erfolgt eine Kettenverlängerung über Aminogruppen. Bei der Herstellung der Bindemittel wird eine große Menge Wasser zugesetzt, so daß aufgrund des Massenwirkungsgesetzes praktisch keine Siloxanbrücken entstehen.

Aufgabe der vorliegenden Erfindung ist die Bereitstellung neuer wäßriger Polyurethandispersionen, die bei Verwendung als Bindemittel in wäßrigen Überzugsmitteln, insbesondere in Wasserbasislacken, die Herstellung von Mehrschichtlackierungen mit verbesserter Schwitzwasserbeständigkeit erlauben. Bei Verwendung von wäßrigen Effektbasislacken, die die bereitzustellende PU-Dispersion als Alleinbindemittel enthalten, soll die Effektausbildung innerhalb von Mehrschichtlackierungen den heutigen Anforderungen in der Automobillackierung entsprechen.

Die Aufgabe wird gelöst durch die Merkmale des Anspruchs 1. Die erfindungsgemäßen Polyurethanharze sind linear oder verzweigt aufgebaut oder liegen in Form von Mikrogelen vor.

In der erfindungsgemäßen PU-Dispersion sind 5 bis 200 mEqu (Millieqiuvalente) an ionischen Gruppen, in ionische Gruppen überführbaren Gruppen und/oder hydrophilen Gruppen pro 100 g Festharz vorhanden.

Sind die in ionische Gruppen überführbaren Gruppen saure Gruppen, oder sind die ionischen Gruppen anionisch, so liegen bevorzugt über 15 und unter 100, besonders bevorzugt über 18 und unter 60 mEqu/100 g Festharz vor.

Sind die in ionische Gruppen überführbaren Gruppen basische Gruppen, oder sind die ionischen Gruppen kationisch, so liegen bevorzugt über 30 und unter 150, besonders bevorzugt über 45 und unter 100 mEqu/100 g Festharz vor.

Bei den hydrophilen Gruppen beziehen sich die 5 bis 200 mEqu auf die niedrigstmolekularen Bestandteile solcher Gruppen, also beispielsweise auf Alkylenoxideinheiten in Polyalkylenoxidgruppen, z.B. auf Ethylenoxideinheiten in Polyethylenoxidgruppen (derartige Einheiten heißen auch Repetitionseinheiten).

Beispiele für in der erfindungsgemäßen PU-Dispersion enthaltene ionische und in ionische Gruppen überführbare Gruppen und hydrophile Gruppen ergeben sich aus der folgenden Beschreibung, die die Herstellung der PU-Dispersion betrifft.

Einen weiteren Gegenstand der Erfindung stellt die Verwendung von wäßrigen Dispersionen von Polyurethanharzen dar, die dadurch hergestellt werden, daß man ein ionische Gruppen, zur Ionenbildung befähigte Gruppen und/oder hydrophile Gruppen enthaltendes Polyurethan-Prepolymer, das mindestens eine Gruppe R'OSi- aufweist, worin
R' = C₁- bis C₈-Alkyl oder C(O)R''', und
R''' = C₁ - bis C₁₀-Alkyl
und das in Gegenwart eines organischen Lösemittels vorliegen kann, einer Kettenverlängerung unterzieht, indem man Wasser in mindestens stöchiometrischer Menge zur Hydrolyse der SiOR'-Gruppen zusetzt, das Reaktionsprodukt während oder nach der Kettenverlängerung gegebenenfalls nach vollständiger oder teilweiser Neutralisation in eine wäßrige Dispersion überführt und gegebenenfalls vorhandenes Lösemittel abdestilliert, wobei die Mengenanteile der einzelnen Edukte so gewählt werden, daß die fertigen Polyurethanharze die vorstehend zur Definition der Dispersionen angegebenen Spezifikationen aufweisen.

Zur Hydrolyse und der damit bedingten Kettenverlängerung kann die gesamte Wassermenge, die zur Herstellung der Dispersion erforderlich ist, verwendet werden. Bevorzugt erfolgt jedoch zunächst die Hydrolyse mit einer geringeren Wassermenge, bevorzugt bis zum zehnfachen stöchiometrischen Überschuß, besonders bevorzugt bis zum fünffachen stöchiometrischen Überschuß berechnet auf die zur Hydrolyse der R'OSi-Gruppen notwendigen Wassermenge.

Die Herstellung der für das erfindungsgemäße Verfahren verwendeten Polyurethan(PU)-Prepolymeren mit R'OSi-Gruppen kann beispielsweise erfolgen durch:
1) Herstellung eines linearen oder verzweigten, nicht gelierten, ionische Gruppen, zur Ionenbildung befähigte Gruppen und/oder hydrophile Gruppen enthaltenden sowie isocyanatfunktionellen PU-Prepolymeren in einem organischen Lösemittel oder in Abwesenheit von Lösemitteln,
2) Umsetzung der freien Isocyanatgruppen des PU-Prepolymeren mit einer oder mehreren Verbindungen der allgemeinen Formel

   ((H-X-)ₙR)ₐSi(OR')_{b}(R'')_{c} (I)

   mit X = 0, S, NH oder NR'^{v}, bevorzugt NH oder NR'^{v},
   R = ein bifunktioneller, trifunktioneller oder tetrafunktioneller, bevorzugt bifunktioneller organischer Rest mit einem Molekulargewicht von 13 bis 500, bevorzugt (Ar)alkylen mit 1 bis 12 C-Atomen, besonders bevorzugt Alkylen mit 1 bis 12 C-Atomen,
   R' = C₁- bis C₈-Alkyl oder C(O)R''', bevorzugt C₁- bis C₄-Alkyl,
   R" = R''' = C₁- bis C₁₀-Alkyl, wobei R" und R"' gleich oder verschieden sein können,
   R'^{v} = C₁- bis C₈-Alkyl,
   a = 1, 2 oder 3, bevorzugt 1,
   b = 1, 2 oder 3, bevorzugt 2 oder 3,
   c = 0, 1 oder 2,
   n = 1 bis 3, bevorzugt 1 oder 2, besonders bevorzugt 1
   wobei mehrere Reste R', R'' und R''' gleich oder verschieden und worin die Summe aus a plus b plus c vier ergibt,
gegebenenfalls im Gemisch mit einem oder mehreren NH₂- und/oder NH-Gruppen tragenden Alkanolaminen mit einer OH-Funktionalität von mindestens 1.

Die Kettenverlängerung des R'OSi-funktionalisierten PU-Prepolymeren erfolgt nach Zugabe eines bevorzugt bis zu zehnfachen stöchiometrischen Überschusses der zur Hydrolyse der SiOR'-Gruppen notwendigen Wassermenge. Die Hydrolyse der R'OSi-Gruppen läuft schnell ab. Die durch Hydrolyse gebildeten HOSi-Gruppen kondensieren unter Wasserabspaltung zu Siloxanbrücken und führen damit zu einem kettenverlängerten Polyurethanharz, das praktisch frei ist von R'OSi- und/oder HOSi-Gruppen, d. h. diese Gruppen liegen in einer so geringen Menge vor, daß eine Vernetzung über sie nicht möglich ist.

Die Überführung des gegebenenfalls neutralisierten Reaktionsprodukts in eine wäßrige Dispersion unter Zusatz einer ausreichenden Wassermenge kann während oder nach der Kettenverlängerung erfolgen. Die Kettenverlängerung läuft in der Harzphase ab; wenn also das Harz bereits durch

Zugabe einer ausreichenden Wassermenge dispergiert ist, so läuft die Kettenverlängerung in den Dispersionsteilchen selbst ab.

Gegebenenfalls vorhandenes Lösemittel kann aus der wäßrigen Dispersion gegebenenfalls abdestilliert werden.

Beim erfindungsgemäßen Verfahren werden die Mengenanteile der einzelnen Edukte so gewählt und die Reaktion so geführt, daß das fertige Polyurethanharz 2 bis 150 mmol, bevorzugt 3 bis 100 mmol, besonders bevorzugt 7 bis 70 mmol Siloxanbrücken (-Si-O-Si-) pro 100 g Festharz enthält, ein Zahlenmittel der Molmasse (Mn) von 2500 bis 1000000, eine Hydroxylzahl von 0 bis 100, bevorzugt von 0 bis 60 mg KOH/g, bezogen auf Festharz und einen Gehalt an ionischen, in ionische Gruppen überführbaren und/oder hydrophilen Gruppen von 5 bis 200 mEqu pro 100 g Festharz aufweist.

Alternativ zum vorstehend beschriebenen sequentiellen Herstellungsverfahren über NCO-Prepolymere kann die Herstellung des R'OSi-funktionalisierten PU-Prepolymeren auch in einem sogenannten Einstufenverfahren durchgeführt werden, d.h. die vorstehend beschriebenen Verfahrensschritte 1) und 2) können simultan durchgeführt werden, indem die dort benötigten Edukte gleichzeitig miteinander umgesetzt werden.

Bei der Auswahl der Reaktionspartner ist darauf zu achten, daß die funktionellen Gruppen -XH nicht in ihrer Reaktivität beeinträchtigt werden.

Die beispielsweise im Verfahrensschritt 1) erfolgende Herstellung des linearen oder verzweigten, nicht gelierten ionische Gruppen, zur Ionenbildung befähigte Gruppen und/oder hydrophile Gruppen enthaltenden sowie isocyanatfunktionellen PU-Prepolymeren, nachstehend auch als NCO-Gruppen enthaltendes Polyurethan-Prepolymer bezeichnet, kann beispielsweise erfolgen durch Umsetzung von einer oder mehreren Verbindungen mit mindestens zwei gegenüber Isocyanat reaktiven Gruppen, insbesondere einem oder mehreren Polyolen, bevorzugt Diolen, mit einem oder mehreren organischen Polyisocyanaten, bevorzugt Diisocyanaten und mit einer oder mehreren Verbindungen mit mehr als einer, bevorzugt zwei, mit Isocyanatgruppen reaktiven Gruppen und mindestens einer ionischen Gruppe, zur Ionenbildung befähigten Gruppe und/oder hydrophilen Gruppe.

Beispielsweise kann erfindungsgemäß ein als Ausgangsprodukt für die Herstellung der erfindungsgemäßen PU-Dispersion verwendbares, NCO-Gruppen enthaltendes Polyurethan-Prepolymer hergestellt werden durch Umsetzung in wasserfreiem Milieu von
a) mindestens einer linearen oder verzweigten Verbindung, die mindestens zwei gegenüber Isocyanat reaktive Gruppe trägt mit einem mittleren Molekulargewicht von 60 - 10000, bevorzugt 60 - 6000,
b) mindestens einem organischen Polyisocyanat, insbesondere Diisocyanat,
c) mindestens einer Verbindung mit mehr als einer mit Isocyanat reaktiven Gruppe, und mindestens einer ionischen Gruppe, zur Ionenbildung befähigten Gruppe und/oder hydrophilen Gruppe, mit einer zahlenmittleren Molmasse (Mn) bis zu 10000, bevorzugt bis zu 2000, in einem NCO/OH-Verhältnis von über 1 bis 4 : 1.

Gemäß einer bevorzugten Ausführungsform der Erfindung ist die vorstehend genannte lineare oder verzweigte Verbindung der Komponente a) mindestens ein Polyol auf der Basis eines oder mehrerer Polyether, Polyester und/oder Polycarbonate, mit mindestens zwei OH-Gruppen im Molekül und einem Zahlenmittel der Molmasse (Mn) von 600 - 10000, bevorzugt über 1000 und unter 5000, gegebenenfalls unter Mitverwendung von einem oder mehreren zumindest difunktionellen niedermolekularen Alkoholen und/oder Aminen und/oder Aminoalkoholen mit einer Molmasse unter 600, bevorzugt unter 400.

Alle Herstellungsverfahren für NCO-Gruppen enthaltende Polyurethan-Prepolymere können als Ein- oder Mehrstufenverfahren durchgeführt werden.

Das Isocyanatgruppen enthaltende PU-Prepolymer weist bevorzugt einen Gehalt von Urethan-(-NHCOO-) und gegebenenfalls Harnstoff-(-NHCONH) Gruppen zwischen 10 und 300 Milliequivalent pro 100 g Festharz auf.

Die Darstellung der erfindungsgemäßen wäßrigen Polyurethandispersion kann auf jeder Stufe ohne organische Lösemittel durchgeführt werden.

Die zur Herstellung des NCO-Gruppen enthaltenden PU-Prepolymeren als Komponente a) eingesetzten Verbindungen können beispielsweise eine lineare oder verzweigte Polyolkomponente, z.B. Diole sein. Es handelt sich beispielsweise um dem Fachmann geläufige Polyole, die auf dem Gebiet der PU-Chemie eingesetzt werden. Beispiele werden z.B. in der DE-A-42 28 510 beschrieben. Geht man von einer linearen Diolkomponente aus, können zum Erzielen einer Verzweigung des Polymeren Anteile an Polyolen mit einer Funktionalität von 3 oder mehr zugesetzt werden. Dabei ist die Menge so zu wählen, daß keine Gelbildung bei der Synthese des NCO-Gruppen enthaltenden PU-Prepolymeren auftritt.

Geeignete Diole sind z. B. auch von Fettalkoholen abgeleitete Diole. Es können auch beispielsweise höhere Fettalkohole mit 8 bis 22 Kohlenstoffatomen dimerisiert oder trimerisiert werden unter Bildung von langkettigen Polyolen. Vorzugsweise ist das langkettige Polyol ein Diol und besonders bevorzugt ein C₃₆-Dimerdiol, auch bekannt als Dimeralkohol oder Dimerfettalkohol. Dieser kann leicht durch Hydrogenierung von Dimerfettsäure hergestellt werden.

Beispiele für die Polyolkomponente a) können Polyetherpolyole der allgemeinen Formel II: 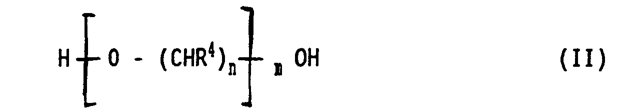 sein, in der R⁴ Wasserstoff oder ein niedriger Alkylrest (z.B. C₁ bis C₆ oder C₁ bis C₄), gegebenenfalls mit verschiedenen Substituenten, ist, n = 2 bis 6 und m = 10 bis 50 oder noch höher ist, wobei die Reste R⁴ gleich oder verschieden sind.

Als weitere Beispiele für die Polyolkomponente a) können Polyesterpolyole genannt werden. Man kann die Polyesterpolyole z.B. durch Veresterung von organischen Dicarbonsäuren oder ihren Anhydriden mit organischen Polyolen herstellen. Die Dicarbonsäuren und die Polyole können aliphatische, cycloaliphatische oder aromatische Dicarbonsäuren und Polyole sein.

Als Dicarbonsäuren können langkettige Dicarbonsäuren mit 18 bis 60 Kohlenstoffatomen in der Kette sein. Die langkettige Komponente kann eine Alkylen- oder eine Aralkylenkette oder eine Kette mit ähnlicher Hydrophobie sein. Eine bevorzugte langkettige Dicarbonsäure ist die als Dimersäure bekannte C₃₆-Dicarbonsäure. C₃₆-Dimerfettsäurefraktionen bestehen im wesentlichen aus dimerer Verbindung (C₃₆-Dimercarbonsäuren) zusammen mit bis zu ungefähr 20 bis 22 % trimerer Verbindung (C₅₄). Solche Mischungen werden als Dimerfettsäure bezeichnet. Bevorzugt wird eine Mischung mit 97 % Dimer und 3 % Trimer.

Die Polyester besitzen vorzugsweise ein Molekulargewicht von 300 bis 6000, eine OH-Zahl von 20 bis 400 und eine Säurezahl von kleiner 3, bevorzugt kleiner 1. Bevorzugt werden lineare Polyester eingesetzt.

Als Komponente a) können z.B. auch Polycarbonatdiole eingesetzt werden, wie sie beispielsweise in der EP-A-0 427 979 beschrieben werden.

Ferner lassen sich auch Polyesterpolyole, bevorzugt Diole, die sich von Lactonen ableiten, als Komponente a) benutzen. Diese Produkte erhält man beispielsweise durch die Umsetzung eines epsilon-Caprolactons mit einem Diol. Beispiele solcher Produkte sind in der US-A-3 169 945 beschrieben. Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können beispielsweise der allgemeinen Formel 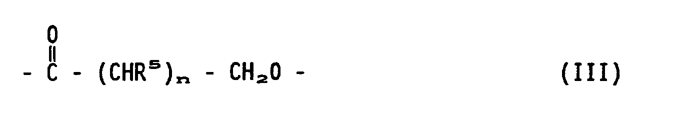 entsprechen, in der n bevorzugt 4 bis 6 ist und der Substituent R Wasserstoff, ein Alkylrest, ein Cycloalkylrest oder ein Alkoxyrest ist, wobei kein Substituent mehr als 12 Kohlenstoffatome enthält und die gesamte Anzahl der Kohlenstoffatome in den Substituenten des Lactonringes 12 nicht übersteigt.

Das als Ausgangsmaterial verwendete Lacton kann ein beliebiges Lacton oder eine beliebige Kombination von Lactonen sein, wobei dieses Lacton bevorzugt mindestens 6 Kohlenstoffatome in dem Ring enthält, z.B. 6 bis 8 Kohlenstoffatome und wobei mindestens 2 Wasserstoffsubstituenten an dem Kohlenstoffatom vorhanden sein sollten, das an die Sauerstoffgruppe des Rings gebunden ist. Das als Ausgangsmaterial verwendete Lacton kann durch die folgende allgemeine Formel IV dargestellt werden: 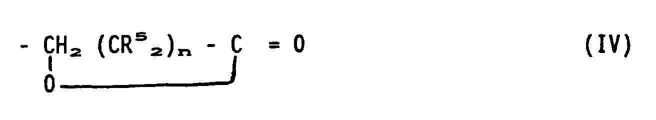 in der n und R⁵ die bereits angegebene Bedeutung haben.

Die bei der Erfindung für die Herstellung der Polyesterdiole bevorzugten Lactone sind die epsilon-Caprolactone, bei denen n den Wert 4 hat. Das am meisten bevorzugte Lacton ist das unsubstituierte epsilon-Caprolacton, bei dem n den Wert 4 hat und alle R⁵-Substituenten Wasserstoff sind. Dieses Lacton wird besonders bevorzugt, da es in großen Mengen zur Verfügung steht und die entstehenden Polylactondiole Überzüge mit ausgezeichneten Eigenschaften ergeben. Außerdem können verschiedene andere Lactone einzeln oder in Kombination benutzt werden.

Beispiele von für die Umsetzung mit dem Lacton geeignete aliphatischen Diolen schließen Ethylenglykol, 1,3-Propandiol, 1,4-Butandiol und/oder Dimethylolcyclohexan ein.

Bei der als Komponente a) einsetzbaren isocyanatreaktiven Verbindung kann es sich beispielsweise auch handeln um
- OH-Gruppen und/oder SH-Gruppen enthaltende Polythioether, wie Kondensationsprodukte von Thiodiglykol mit sich selbst und/oder mit anderen Glykolen, Dicarbonsäuren, Hydroxycarbonsäuren, Formaldehyd, Aminocarbonsäuren oder Aminoalkoholen. Es handelt sich bei den Produkten entweder um gemischte Polythioether, Polythioetherester oder um Polythioetheresteramide.
- OH-Gruppen enthaltende Polyacetale, z.B. aus den vorstehend genannten Polyolen, insbesondere Diethylenglykol, Triethylenglykol, 4,4'-Dioxyethoxy-diphenyldimethylen, 1,6-Hexandiol und Formaldehyd. Geeignete Polyacetale können auch durch Polymerisation cyclischer Acetale erhalten werden.
- Polyetherester, die mit Isocyanat reaktiven Gruppe enthalten.
- OH-Gruppen enthaltende Polyesteramide und Polyamide, einschließlich bevorzugt linearer Kondensate aus mehrwertigen gesättigten und ungesättigten Carbonsäuren oder ihren Anhydriden und mehrwertigen, gesättigten und ungesättigten Aminoalkoholen, Diaminen, Polyaminen oder Gemischen davon.
- Dihydroxypolyestercarbonate.
- Polyurethandiole, die beispielsweise entweder aus entsprechenden Carbonaten und Diaminen, oder aus, wie üblich, entsprechenden Polyolen und Polyisocyanaten hergestellt werden können.
- Poly(meth)acrylatpolyole, insbesondere Poly(meth)acrylatdiole.
- Polybutadienöl-Diole,
- hydroxyfunktionalisierte Siloxancopolymere, wie z.B. alpha,omega-Dihydroxypolyetherpolydimethylsiloxancopolymere.

Diese Verbindungstypen können allein oder im Gemisch von zwei oder mehreren davon eingesetzt werden. Es können auch Verbindungen eingesetzt werden, die mehreren derartigen Typen entsprechen (intramolekulare Gemische).

Bei den in a) gegebenenfalls mitverwendbaren niedermolekularen Verbindungen handelt es sich besonders um Alkohole und Amine. Es sind die aus der Polyurethanchemie an sich bekannten im Sinne einer Isocyanat-Additionsreaktion mindestens difunktionellen Hydroxyl- und/oder Aminogruppen aufweisenden Verbindungen eines unter 600, bevorzugt unter 300 liegenden Molekulargewichts. Als Verbindung kommen sowohl im Sinne der Isocyanatadditionsreaktion difunktionelle Verbindungen als auch mindestens trifunktionelle Verbindungen bzw. beliebige Gemische derartiger Verbindungen in Betracht.

Als Komponente b) können für die Herstellung der Polyurethandispersion beliebige organische Polyisocyanate, wie z.B. Diisocyanate eingesetzt werden. Es können aliphatische, cycloaliphatische oder aromatische, sowie auch sterisch gehinderte Isocyanate eingesetzt werden. Es können beispielsweise auch Ether- oder Estergruppen enthaltende Polyisocyanate, z.B. Diisocyanate eingesetzt werden. Beispiele für geeignete Diisocyanaten sind Trimethylendiisocyanat, Tetramethylendiisocyanat, Pentamethylendiisocyanat, Hexamethylendiisocyanat, Propylendiisocyanat, Ethylendiisocyanat, 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylen-diisocyanat, 2,6-Toluylen-diisocyanat, 1-Isocyanatomethyl-5-isocyanato-1,3,3-trimethylcyclohexan, Bis-(4-isocyanatocyclohexyl)methan, Bis-(4-isocyanato-phenyl)-methan, 4,4-Diisocyanato-diphenylether, 1,5-Dibutylpentamethylendiisocyanat, Tetramethylxylylendiisocyanat, 2,3-Bis-(8-isocyanatooctyl)-4-octyl-5-hexylcyclohexan, 3(4)-Isocyanatomethyl-1-methylcyclohexylisocyanat, und/oder 2,6-Diisocyanatomethyl-capronat.

Bevorzugt eingesetzt werden nicht vergilbende und/oder sterisch gehinderte Isocyanate mit 4 bis 25, vorzugsweise 6 - 16 C-Atomen, die in alpha-Stellung zur NCO-Gruppe eine oder zwei lineare, verzweigte oder cyclische Alkylgruppen mit 1 bis 12, bevorzugt 1 bis 4 C-Atomen enthalten. Das Grundgerüst kann aus einem aromatischen oder alicyclischen Ring oder aus einer aliphatischen linearen oder verzweigten C-Kette mit 1 bis 12 C-Atomen bestehen. Beispiele hierfür sind Isophorondiisocyanat, Bis-(4-isocyanatocyclohexyl)methan, 1,1,6,6-Tetramethyl-hexamethylendiisocyanat, 1,5-Dibutyl-pentamethylendiisocyanat, 3(4)-Isocyanatomethyl-1-methyl-cyclohexyl-isocyanat, p- und m-Tetramethylxylylendiisocyanat und/oder der entsprechenden hydrierten Homologen.

Gegebenenfalls können auch in geringen Anteilen höherfunktionelle Isocyanate wie z.B. Polyisocyanate vom Biuret- oder Isocyanurattyp, oder Produkte, die durch Umsetzung von einem Überschuß von Diisocyanat an Polyole erhalten werden, zugesetzt werden. Diese Arbeitsweise ist jedoch nicht bevorzugt.

Erfindungsgemäß können beispielsweise als Komponente c) bevorzugt niedermolekulare Verbindungen verwendet werden, die mehr als eine, bevorzugt zwei oder mindestens zwei mit Isocyanatgruppen reagierende Gruppen und mindestens eine ionische Gruppe, zur Ionenbildung befähigte Gruppe und/oder hydrophile Gruppe enthalten. Bevorzugt sind anionische oder anionenbildende Gruppen. Geeignete mit Isocyanatgruppen reagierende Gruppen sind insbesondere Hydroxylgruppen und primäre und sekundäre Aminogruppen. Als saure zur Anionenbildung befähigte Gruppen kommen z.B. Carboxyl-, Phosphorsäure- und Sulfonsäuregruppen in Betracht. Als basische in Kationen überführbare Gruppen kommen beispielsweise primäre, sekundäre und tertiäre Aminogruppen oder Oniumgruppen, wie quartäre Ammonium-, Phosphonium- und/oder tertiäre Sulfoniumgruppen in Betracht. Die erfindungsgemäß bevorzugt einzuführenden anionischen Gruppen sind Carboxylgruppen; sie können beispielsweise durch Verwendung von Hydroxyalkancarbonsäuren der folgenden allgemeinen Formel als Komponente c) eingeführt werden:

(HO)ₓQ(COOH)_{y}

worin
Q einen geraden oder verzweigten Kohlenwasserstoffrest mit 1 bis 12 C-Atomen darstellt und
x und y jeweils 1 bis 3 bedeuten. Beispiele hierfür sind Zitronensäure und Weinsäure. Bevorzugt sind solche Carbonsäuren, worin x = 2 und y = 1 ist. Beispiele hierfür sind in der US-A-3 412 054 beschrieben. Eine bevorzugte Gruppe von Dihydroxyalkansäuren sind alpha,alpha-Dimethylolalkansäuren der allgemeinen Formel 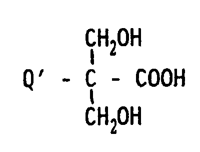 worin Q' Wasserstoff oder C₁-C₈-Alkyl ist. Die bevorzugtesten Verbindungen sind alpha,alpha-Dimethylolpropionsäure und alpha,alpha-Dimethylolbuttersäure.

Weitere Beispiele für verwendbare Dihydroxyalkansäuren sind Dihydroxypropionsäure, Dimethylolessigsäure, Dihydroxybernsteinsäure oder Dihydroxybenzoesäure. Geeignet sind auch die durch Oxydation von Monosacchariden zugänglichen Polyhydroxysäuren, z.B. Glukonsäure, Zuckersäure, Schleimsäure und Glucuronsäure.

Aminogruppenhaltige Säuren, die verwendbar sind, sind beispielsweise alpha,alpha-Diamino-valeriansäure, 3,4-Diaminobenzoesäure, 2,4-Diaminotoluol-sulfonsäure-(5) und 4,4-Diamino-di-phenylethersulfonsäure.

Als erfindungsgemäße Komponente c) können auch saure Polyester wie sie in der DE-A-39 03 804 beschrieben sind, eingesetzt werden. Diese Polyester besitzen vorzugsweise ein Molekulargewicht von 300 bis 2000, eine Hydroxylzahl von 56 bis 374 und eine Säurezahl von 28 bis 187.

Als c)-Komponente können auch ionische oder in ionische Gruppen überführbare Gruppen enthaltende Polyurethanpolyole eingesetzt werden.

Ein solches Polyurethanpolyol in Form eines Prepolymers mit endständigen OH-Gruppen erhält man z.B. durch Umsetzung eines oder mehrerer Polyisocyanate, wie z.B. für die Komponente b) angegeben, mit einem Überschuß einer oder mehrerer Verbindungen wie für die Komponente a) angegeben und mit mindestens einer Verbindung wie für die Komponente c) angegeben.

Die Komponente c) kann auch nicht-ionische hydrophile Polyole umfassen. Es handelt sich z.B. um Verbindungen, die Polyetherketten mit eingebauten Ethylenoxideinheiten aufweisen. Es sind Verbindungen mit einem oder zwei gegenüber Isocyanaten reaktionsfähigen Wasserstoffatomen, die beispielsweise in der Seitenkette Ethylenoxid aufweisende Polyetherketten tragen oder um Gemische davon. Es handelt sich dabei beispielsweise um Verbindungen der allgemeinen Formel

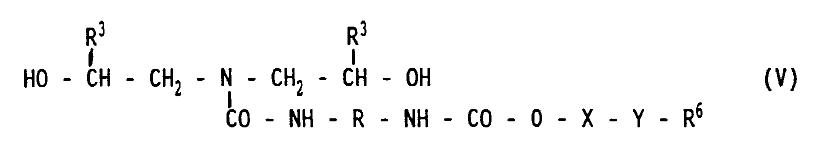

HO - X - Y - R⁶ (VI)

HNR³ - X - Y - R⁶ (VII)

worin
R = der Rest, der sich aus einer Isocyanatkomponente ergibt, z.B. aus Isocyanaten, wie sie vorstehend genannt wurden,
R³ = H, lineares oder verzweigtes C₁-C₈-Alkyl,
R⁶ = C₁-C₁₂-Alkyl, bevorzugt unsubstituiertes C₁-C₄-Alkyl,
X = ein Rest, wie er durch Entfernen des endständigen Sauerstoffatoms aus einer Polyalkylenoxidkette mit 5 bis 90, vorzugsweise 20 bis 70 Kettengliedern erhalten wird, wobei die Kettenglieder zumindest zu 40 %, vorzugsweise zu 65 % aus Ethylenoxideinheiten bestehen und die neben Ethylenoxideinheiten beispielsweise auch Propylenoxid-, Butylenoxid- oder Styroloxideinheiten darstellen können. Unter den letztgenannten Einheiten sind Propylenoxideinheiten bevorzugt.

Y = - 0 - oder - NR⁶ -, wobei R⁶ wie vorstehend definiert ist. Die Herstellung der Verbindungen V bis VII kann z.B. analog US-A-3 920 598, US-A-3 905 929, US-A-4 190 566 oder US-A-4 237 264 erfolgen.

Die anionischen, kationischen oder nicht-ionischen Gruppen der Komponente c) dienen zur Stabilisierung der wäßrigen Dispersion. Es können ionische und nicht-ionische Gruppen gemeinsam eingesetzt werden. Bevorzugt ist eine Stabilisierung durch ionische Gruppen, besonders bevorzugt anionische Gruppen.

Zur Herstellung eines anionischen Urethanprepolymers sind die Dihydroxycarbonsäuren bevorzugt. Besonders bevorzugt ist die Dimethylolpropionsäure. Die Komponente c) wird bevorzugt in einer Menge von etwa 0,4 bis etwa 7,5 Gew.-%, besonders bevorzugt etwa 0,8 bis 5,0 Gew.-% (berechnet als Carboxylgruppe COOH), bezogen auf das eingesetzte Urethanprepolymer (Festharz), verwendet. Wenn die Carboxylgruppenmenge unter etwa 0,4 Gew.-% liegt, ist es schwierig, eine stabile Emulsion herzustellen. Wenn dagegen die Menge 7,5 Gew.-% übersteigt, verstärkt sich die hydrophile Eigenschaft, was die Emulsion hochviskos macht und die Wasserbeständigkeit der Beschichtung verringert.

Die Mengen an a), b) und c) werden so gewählt, daß bei der Umsetzung ein Umsetzungsprodukt mit endständigen NCO-Gruppen entsteht, d.h. es wird mit einem Polyisocyanatüberschuß gearbeitet. Man kann mit einem NCO- zu OH-Verhältnis von über 1 bis 4 : 1 arbeiten, bevorzugt ist der Bereich von 1,1 bis 2 : 1, besonders bevorzugt von 1,1 bis 1,7 : 1. Bevorzugt handelt es sich um Polyurethane mit weniger als 280 mEquivalenten - NHCOO - pro 100 g Festharz. Das Umsetzungsprodukt kann verzweigt aufgebaut sein, bevorzugt ist es im allgemeinen aber linear aufgebaut.

Das NCO-Gruppen enthaltende Polyurethan-Prepolymer wird mit einer oder mehreren Verbindungen der allgemeinen Formel

((H-X-)ₙR)ₐSi(OR')_{b}(R")_{c} (I)

mit X = 0, S, NH oder NR'^{v}, bevorzugt NH oder NR'^{v},
R = bifunktioneller bis tetrafunktioneller, bevorzugt bifunktioneller organischer Rest mit einem Molekulargewicht von 13 bis 500, bevorzugt (Ar)alkylen mit 1 bis 12 C-Atomen, besonders bevorzugt Alkylen mit 1 bis 12 C-Atomen,
R' = C₁- bis C₈-Alkyl oder C(O)R " ', bevorzugt C₁- bis C₄-Alkyl,
R" = R" ' = C₁- bis C₁₀-Alkyl,
R'^{v} = C₁- bis C₈-Alkyl,
a = 1, 2 oder 3, bevorzugt 1,
b = 1, 2 oder 3, bevorzugt 2 oder 3,
c = 0, 1 oder 2,
n = 1 bis 3, bevorzugt 1 oder 2, besonders bevorzugt 1
und worin die Summe aus a plus b plus c vier ergibt, gegebenenfalls im Gemisch mit einem oder mehreren NH₂- und/oder NH-Gruppen tragenden Alkanolaminen mit einer OH-Funktionalität von mindestens 1, zu einem ionische Gruppen, zur Ionenbildung befähigte Gruppen und/oder hydrophile Gruppen enthaltenden, R'OSi-funktionalisierten PU-Prepolymeren umgesetzt.

Bei den Verbindungen der allgemeinen Formel (I) handelt es sich um Silanderivate, die gegenüber Isocyanatgruppen zur Addition befähigte, aktiven Wasserstoff enthaltende Gruppen vom Typ (H-X-)ₙR-aufweisen. Als aktiven Wasserstoff enthaltende, funktionelle Gruppen HX- sind Amingruppen bevorzugt. n besitzt Werte von 1 bis 3, bevorzugt nimmt n den Wert 1 an. Beim Rest R handelt es sich um einen bifunktionellen bis tetrafunktionellen, bevorzugt bifunktionellen organischen Rest, der chemisch inerte Gruppen oder Substituenten tragen kann, mit einem Molekulargewicht von 13 bis 500. Bevorzugt handelt es sich beim Rest R um einen bifunktionellen (Ar)alkylenrest mit 1 bis 12 C-Atomen. Ein Alkylenrest mit 1 bis 12 C-Atomen ist als Rest R besonders bevorzugt.

Weiterhin enthält das Silanderivat der allgemeinen Formel (I) 1 bis 3, bevorzugt 2 oder 3 an Silizium gebundene Gruppen -OR', wobei R' bevorzugt die Bedeutung von C₁- bis C₈-Alkyl besitzt.

Als einige bevorzugte Beispiele für Verbindungen (I) seien beta-Aminoethyltriethoxysilan, gamma-Aminopropyltriethoxysilan, gamma-Aminopropyltrimethoxysilan, gamma-Aminopropylethyldiethoxysilan, gamma-Aminopropylphenyldiethoxysilan, gamma-Aminopropyltrimethoxysilan, delta-Aminobutyltriethoxysilan, delta-Aminobutylethyldiethoxysilan, N-(2-Aminoethyl-3-aminopropyl)trimethoxysilan, N-2-Aminoethyl-3-aminopropyl-tris-(2-ethylhexoxy)silan, 6-(Aminohexylaminopropyl)trimethoxysilan, N-Aminoethyl-3-aminopropyl-methyl-dimethoxysilan genannt.

Die Umsetzung des NCO-funktionellen Polyurethan-Prepolymeren zum R'OSi-funktionalisierten PU-Prepolymeren erfolgt unter vollständigem Verbrauch der HX-Gruppen der Verbindungen I. Bevorzugt werden Isocyanatgruppen und HX-Gruppen stöchiometrisch im Verhältnis 1 : 1 miteinander zur Reaktion gebracht. Es ist aber auch möglich, die Reaktion mit einem Überschuß an Isocyanatgruppen durchzuführen. Die verbleibenden Isocya natgruppen können für weitere Aufbaureaktionen, beispielsweise durch Reaktion mit Wasser, Hydrazin, Carbonsäurehydraziden, Polyolen oder Aminen, genutzt werden.

Das der erfindungsgemäßen Polyurethandispersion zugrundeliegende Polyurethanharz kann Hydroxylgruppen besitzen. Ist dieses gewünscht, so wird das NCO-Gruppen enthaltende Polyurethan-Prepolymer bei der Herstellung des R'OSi-funktionalisierten PU-Prepolymeren mit mindestens einer Verbindung der allgemeinen Formel I und mit mindestens einem NH₂- und/oder NH-Gruppen tragenden Alkanolamin mit einer OH-Funktionalität von mindestens 1 umgesetzt. Die Umsetzung erfolgt unter vollständigem Verbrauch der HX-Gruppen der Verbindungen I und der NH-Gruppen des Alkanolamins. Die Isocyanatgruppen des NCO-funktionellen PU-Prepolymeren werden mit den HX-Gruppen von I und den NH-Gruppen des Alkanolamins bevorzugt im stöchiometrischen Verhältnis zur Reaktion gebracht. Dabei können das Alkanolamin und die Verbindung I in Mischung oder nacheinander mit dem NCO-funktionellen Polyurethan-Prepolymer umgesetzt werden.

Bei den NH₂- und/oder NH-Gruppen tragenden Alkanolaminen mit einer OH-Funktionalität von mindestens 1 handelt es sich um Verbindungen, die als Lieferanten für Hydroxylgruppen in der erfindungsgemäßen Polyurethanharzdispersion dienen können. Die NH- oder NH₂-Gruppen der Alkanolamine weisen gegenüber den Isocyanatgruppen des NCO-funktionellen PU-Prepolymeren eine im Vergleich zu ihren OH-Gruppen deutlich höhere Reaktivität auf, d.h. bevorzugt reagieren die NH-Gruppen mit den Isocyanatgruppen unter Harnstoffbildung.

Beispiele für geeignete Alkanolamine mit einer OH-Funktionalität von mindestens 1 sind Monoalkanolamine und Dialkanolamine, z.B. Diethanolamin, N-Methylethanolamin, Diisopropanolamin, N-Ethylisopropanolamin, Monoisopropanolamin, Ethanolamin, 2,2-Aminoethoxyethanol, Monoethylethanolamin, Butylethanolamin, Cyclohexylethanolamin, 3-Aminopropanol, 2-Aminobutanol-1.

Anstelle der NH₂- und/oder NH-Gruppen tragenden Alkanolamine können auch andere gegenüber NCO-Gruppen reaktive monofunktionelle Verbindungen eingesetzt werden, beispielsweise Monoamine und/oder Monoalkohole mit C-6 bis C-30-Alkylresten. Dabei sind Fettamine und/oder Fettalkohole mit mehr als 12 C-Atomen bevorzugt. In diesem Fall werden Siloxanbrücken aufweisende Polyurethanharze erhalten, die keine Hydroxylgruppen enthalten. Selbstverständlich können Monoamine und/oder Monoalkohole auch im Gemisch mit den NH₂- und/oder NH-Gruppen tragenden Alkanolaminen eingesetzt werden. Auf diese Weise läßt sich die OH-Zahl des resultierenden Siloxanbrücken aufweisenden Polyurethanharzes im erfindungsgemäßen Bereich von 0 - 100 beliebig einstellen.

Ein erfindungswesentlicher Schritt bei der Herstellung des der erfindungsgemäßen Polyurethandispersion zugrundeliegenden Polyurethanharzes besteht darin, daß dem R'OSi-funktionalisierten PU-Prepolymer, welches gegebenenfalls Hydroxylgruppen aufweist, eine zur Hydrolyse der R'OSi-Gruppen notwendige Wassermenge zugesetzt wird. Das Wasser wird bevorzugt in bis zu zehnfachem Überschuß des zur Hydrolyse der R'OSi-Gruppen notwendigen Wassers zugesetzt. Besonders bevorzugt wird die ein- bis fünffache stöchiometrische Wassermenge zugesetzt.

Die Hydrolysereaktion, sowie die damit verlaufende Kettenverlängerung, kann, falls gewünscht, bei erhöhter Temperatur durchgeführt werden. Beispielsweise sind Temperaturen bis zu 95°C geeignet.

Die durch Hydrolyse gebildeten Silanolgruppen kondensieren unter Ausbildung von Siloxanbrücken. Dies führt zur beabsichtigten Erhöhung des Molekulargewichts im Sinne einer Kettenverlängerung. Abhängig vom eingesetzten R'OSi-funktionalisierten PU-Prepolymeren werden dabei lineare, verzweigte oder vernetzte Produkte gewonnen, die praktisch frei sind von R'OSi- und/oder HOSi-Gruppen. Die Ausbildung der Siloxanbrücken erfolgt in der dispergierten oder nicht-dispergierten Harzphase, d.h. vor oder nach dem Überführen in die wäßrige Dispersion.

Das Polyurethanharz weist ionische Gruppen, zur Ionenbildung befähigte Gruppen und/oder hydrophile Gruppen auf. Enthält das Polyurethanharz zur Ionenbildung befähigte Gruppen, so werden diese mit einer geeigneten Verbindung, z.B. einem Neutralisationsmittel, ganz oder teilweise in die entsprechenden Salze überführt. Dies kann in allen Stadien der vorstehend beschriebenen Synthese geschehen, wobei zu beachten ist, daß die Auswahl der zur Salzbildung eingesetzten Verbindungen so getroffen wird, daß diese sich während der Synthese chemisch inert verhalten. Bevorzugt werden die zur Salzbildung eingesetzten Verbindungen wie z.B. Neutralisationsmittel gemeinsam mit dem zur Hydrolyse notwendigen Wasser zugesetzt.

Als ionenbildende Gruppen sind solche bevorzugt, die zur Anionenbildung befähigt sind. Beispiele für solche Gruppen sind vorstehend bei der Synthese des NCO-Gruppen enthaltenden PU-Prepolymeren beschrieben. Zur Umwandlung in Anionen dient dann eine Base, z.B. ein Amin, bevorzugt ein tert.-Amin. Geeignete tertiäre Amine sind z.B. Trialkylamine, wie Trimethylamin, Triethylamin, Triisopropylamin, Tri-n-propylamin und Tri-n-butylamin; N-Alkylmorpholine, wie N-Methylmorpholin und N-Ethylmorpholin; N-Dialkylalkanolamine, wie N-Dimethylethanolamin, N-Diethylethanolamin und N-Dimethylisopropanolamin und Mischungen aus mindestens zwei dieser Verbindungen.

Enthält das Polyurethanharz kationenbildende Gruppen, so werden bevorzugt eine oder mehrere Säuren zur Ionenbildung verwendet. Geeignete Säuren sind z.B. Phosphorsäure oder saure Phosphorsäureester, oder organische Carbonsäuren wie Ameisensäure, Essigsäure, Propionsäure, Acrylsäure, Hydroxycarbonsäuren wie Milchsäure, Dimethylolpropionsäure oder Zitronensäure, oder Dicarbonsäuren wie Malonsäure, Glutarsäure oder Oxalsäure. Es können auch Mischungen der Säuren eingesetzt werden.

Es ist aber auch eine Quartärnisierungsreaktion mit Alkylierungsmitteln, wie z.B. die Umsetzung mit Alkylhalogeniden oder Epoxiden, möglich.

Die Umsetzung der zum Aufbau des NCO-funktionellen PU-Prepolymeren eingesetzten Komponenten als auch die weitere Umsetzung zum R'OSi-funktionalisierten PU-Prepolymeren erfolgen im wasserfreien Milieu beispielsweise bei Temperaturen von 20 bis 140°C, bevorzugt zwischen 50 und 100°C. Es kann lösemittelfrei gearbeitet werden oder es wird in dem Fachmann an sich geläufigen für die Polyurethansynthese geeigneten organischen Lösemitteln gearbeitet. Als Lösemittel können wassermischbare Lösemittel oder wasserunmischbare Lösemittel eingesetzt werden. Im allgemeinen ist es vorteilhaft, solche Lösemittel zu verwenden, die in jedem Stadium der Herstellung der erfindungsgemäßen PU-Dispersion (beispielsweise nach deren Fertigstellung) entfernt werden können, beispielsweise durch Abdestillieren gegebenenfalls unter vermindertem Druck.

Beispiele für geeignete Lösemittel sind Ketone, z.B. Aceton, Methylethylketon, Methylisobutylketon; N-Alkylpyrrolidone, wie z.B. N-Methylpyrrolidon; Ether, wie z.B. Diethylenglykoldimethylether, Dipropylenglykoldimethylether, oder auch cyclische Harnstoffderivate, wie 1,3-Dimethyl-3,4,5,6-tetrahydro-2(1H)-pyrimidinon.

Das lösemittelfrei oder in organischer Lösung vorliegende Polyurethanharz wird durch Zugabe ausreichender Wassermengen in die wäßrige Phase überführt. Die Zugabe der zur Überführung in die wäßrige Phase ausreichenden Wassermenge kann nach Abschluß der Kettenverlängerung erfolgen. Es ist auch möglich die Hauptwassermenge während der Kettenverlängerung bzw. nach der Hydrolyse der R'OSi-Gruppen zuzugeben. Es ergibt sich eine feinteilige Polyurethandispersion mit einer mittleren Teilchengröße von größer 10 und kleiner als 2000 nm, bevorzugt über 50 und unter 500 nm. Die Verteilung kann dabei monomodal oder bimodal, bevorzugt monomodal sein.

Im allgemeinen ist es nicht notwendig, zur Überführung der erfindungsgemäß eingesetzten Polyurethanharze in wäßrige Dispersionen Emulgatoren mitzuverwenden. Dies schließt jedoch nicht aus, daß Emulgatoren ionischer und nicht-ionischer Art zugesetzt werden können, um ein Emulgieren zu erleichtern, und gegebenenfalls die Zahl der ionisierbaren Gruppen zu senken.

Bei der Herstellung der erfindungsgemäßen Polyurethandispersion werden die Edukte in solchen Mengen miteinander zur Reaktion gebracht, daß vom Fachmann gewünschte Bindemittelqualitäten erzielt werden, wie z.B. Wasserdispergierbarkeit, Viskositätsverhalten, Filmbildungseigenschaften, Lagerstabilität. Durch die Wahl der Art und der Menge der Komponenten können auch Eigenschaften wie z.B. Härte und Bewitterungsfähigkeit von aus den Dispersionen erhaltenen Überzügen beeinflußt werden. Die Wahl der Art und der Menge der Komponenten läßt sich vom Fachmann anhand der hier aufgezeigten Lehre leicht, gegebenenfalls anhand von Routineversuchen ermitteln. Insgesamt werden die Mengenanteile der einzelnen Edukte bevorzugt so gewählt und die Reaktion so geführt, daß das der erfindungsgemäßen Polyurethandispersion zugrundeliegende Polyurethanharz 2 bis 150 mmol Siloxanbrücken (-Si-O-Si-) pro 100 g Festharz enthält, ein Zahlenmittel der Molmasse (Mn) von 2500 bis 1000000, eine Hydroxylzahl von 0 bis 100, bevorzugt von 0 bis 60 mg KOH/g, bezogen auf Festharz, und einen Gehalt an ionischen, in ionische Gruppen überführbaren und/oder hydrophilen Gruppen von 5 bis 200 mEqu pro 100 g Festharz aufweist.

Das Herstellen der wäßrigen PU-Dispersion des durch Bildung von Siloxanbrücken kettenverlängerten Harzes kann nach bekannten Verfahren erfolgen. Beispielsweise ist es möglich die neutralisierten Harze vorzulegen und unter gutem Dispergieren mit Wasser zu versetzen. Ebenso kann die gegebenenfalls Neutralisationsmittel enthaltende Wasserphase vorgelegt und unter Rühren das Harz eingearbeitet werden. Ebenso ist eine kontinuierliche Arbeitsweise möglich, d.h. es werden in bekannten Aggregaten, z.B. einem Rotor-Statormischer, gleichzeitig Harz, Wasser und Neutralisationsmittel homogen zusammengemischt. Die Überführung in die Wasserphase kann durch erhöhte Temperatur unterstützt werden.

Der pH-Wert der resultierenden Polyurethandispersion kann beispielsweise auf einen Wert zwischen 5 und 10 eingestellt werden. Es entsteht aus den Komponenten eine feinteilige opake bis milchig trübe wäßrige Dispersion.

Die erfindungsgemäßen bzw. erfindungsgemäß bevorzugt verwendeten anionischen PU-Dispersionen weisen eine Säurezahl von 5 bis 90 (bezogen auf den Festkörper) bevorzugt über 10 und unter 50 auf. Der Festkörper beträgt zwischen 25 und 65 Gew.-%, bevorzugt über 35 und unter 60 Gew.-%. Das Zahlenmittel der Molmasse (Mn) der in den erfindungsgemäßen bzw. den erfindungsgemäß verwendeten PU-Dispersionen enthaltenen Polyurethanharze beträgt beispielsweise 2500 bis 1000000, wobei die Untergrenze bevorzugt bei 5000, besonders bevorzugt bei 20000 und die Obergrenze bei bis zu 500000 liegt.

Gegebenenfalls in den erfindungsgemäßen Polyurethandispersionen enthaltene Lösemittel können falls gewünscht durch Abdestillieren entfernt werden. Dies kann unter vermindertem Druck geschehen.

Einen weiteren Gegenstand der Erfindung bilden die wäßrigen Überzugsmittel, bevorzugt Wasserbasislacke, die aus den erfindungsgemäßen Siloxanbrücken enthaltenden PU-Dispersionen hergestellt werden können. Die wäßrigen Überzugsmittel können selbsttrocknend (physikalisch trocknend) oder fremdvernetzend sein. Die den erfindungsgemäßen PU-Dispersionen zugrundeliegenden PU-Harze besitzen Hydroxylzahlen zwischen 0 und 100, bevorzugt zwischen 0 und 60 mg KOH/g. Werden die erfindungsgemäßen PU-Dispersionen in fremdvernetzenden Überzugsmitteln eingesetzt, so liegt die Hydroxylzahl bevorzugt im oberen Wertebereich.

Zur Herstellung von wäßrigen Überzugsmitteln, bevorzugt Wasserbasislacken werden der PU-Dispersion beispielsweise Pigmente, weitere Bindemittel, Additive sowie gegebenenfalls geringe Mengen an Lösemitteln zugesetzt.

Die erfindungsgemäßen Überzugsmittel können neben der erfindungsgemäßen Polyurethanharz-Dispersion ein oder mehrere weitere Bindemittel enthalten. Dies kann beispielsweise zur Erzielung synergistischer Effekte günstig sein. Beispiele für weitere Bindemittel sind dem Fachmann geläufige übliche filmbildende wasserlösliche oder wasserverdünnbare Harze, wie wasserverdünnbare Polyesterharze, wasserverdünnbare Polyacrylatharze und/oder andersartige wasserverdünnbare Polyurethanharze. Es kann sich um reaktive oder nicht-funktionelle Harze handeln. Die Menge der zugesetzten Harze kann 0 bis 75 Gew.-%, vorzugsweise 0 bis 50 Gew.-% des gesamten Harzfestkörpers betragen. Besonders bevorzugt sind 0 bis 30 Gew.-%. In diesem Zusammenhang bedeutet Harzfestkörper die Summe aller Bindemittel ohne den Vernetzeranteil.

Die Spezifikation und der Mengenanteil von zusätzlichen Bindemitteln werden so gewählt, daß sich bevorzugt ein Gemisch ergibt, das im Mittel einen Gehalt an ionischen, in ionische Gruppen überführbaren und/oder hydrophilen Gruppen von 5 bis 200 mEqu pro 100 g Festharz aufweist. Bevorzugt sind anionische Gruppen.

Die zugesetzten weiteren Bindemittel können gegebenenfalls mit den erfindungsgemäß definierten Polyurethanharzen bei erhöhten Temperaturen präkondensiert werden.

Verwendbare wasserverdünnbare Polyester sind beispielsweise solche mit freien Carboxylgruppen, d.h. Polyester mit hoher Säurezahl. Es sind grundsätzlich zwei Methoden bekannt, die benötigten Carboxylgruppen in das Harzsystem einzufügen. Der erste Weg besteht darin, die Veresterung bei der gewünschten Säurezahl abzubrechen. Bei dieser Verfahrensweise wird der Einbau von sterisch gehinderten Carboxylgruppen, beispielsweise durch Kondensation mit Dimethylolpropionsäure, bevorzugt. Nach Neutralisation mit Basen sind die so erhaltenen Polyester in Wasser löslich. Die zweite Möglichkeit besteht in der Bildung partieller Ester von Di- oder Polycarbonsäuren mit hydroxylreichen Polyestern mit niedriger Säurezahl. Für diese Reaktion werden üblicherweise Anhydride der Dicarbonsäuren herangezogen, welche unter milden Bedingungen unter Ausbildung einer freien Carboxylgruppe mit der Hydroxylkomponente umgesetzt werden.

Die verwendbaren wasserverdünnbaren Polyacrylatharze können ebenso wie die oben beschriebenen Polyesterharze freie Carboxylgruppen enthalten. Es handelt sich beispielsweise um Acryl- bzw. Methacrylcopolymerisate, und die Carboxylgruppen stammen aus den Anteilen an Acryl- oder Methacrylsäure.

Unter zusätzlichen Polyurethandispersionen sind beispielsweise solche zu verstehen, die in der DE-A-36 28 125 beschrieben werden. Es sind anionisch stabilisierte PU-Dispersionen, die durch Umsetzung von Polyolen, Diisocyanaten, ionischen Verbindungen sowie Kettenverlängerung mit Aminen entstehen können. Weiterhin können auch durch nicht-ionische hydrophile Gruppen stabilisierte PU-Dispersionen den erfindungsgemäßen Überzugsmitteln zugesetzt werden.

Die wasserverdünnbaren Polyester oder Polyurethanharze können auch durch geeignete Polymerisationsverfahren in Dispersionen acryliert oder gepfropft werden. Beispiele für verwendbare acrylierte Polyurethandispersionen sind in der DE-A-41 22 265 beschrieben.

Eine weitere Gruppe von wäßrigen Dispersionen, die den erfindungsgemäBen Überzugsmitteln zugesetzt werden können, sind die in der DE-A-36 28 124 beschriebenen Dispersionen auf Basis von ionischen epoxidgruppen-haltigen Polykondensaten, die mit copolymerisierbaren ungesättigten Monomeren umgesetzt werden.

Bei Zusatz von weiteren Bindemitteln ist es selbstverständlich, daß zusätzliche ionisch stabilisierte Harze und Dispersionen nur zusammen mit gleichartig geladenen erfindungsgemäßen ionischen Dispersionen verwendet werden können, um die Stabilität nicht negativ zu beeinflussen.

Zur Bereitung der erfindungsgemäßen Überzugsmittel können verschiedene Vernetzer, wie beispielsweise Formaldehyd-Kondensationsharze, wie Phenol-Formaldehyd-Kondensationsharze und Amin-Formaldehydkondensationsharze, sowie blockierte Polyisocyanate verwendet werden. Die Vernetzer können einzeln und im Gemisch eingesetzt werden. Das Mischungsverhältnis Vernetzer zu Polyurethanharz beträgt bevorzugt 10 : 90 bis 40 : 60, besonders bevorzugt 20 : 80 bis 30 : 70, jeweils bezogen auf das Festkörpergewicht. Wenn neben der erfindungsgemäßen Polyurethanharz-Dispersion weitere Bindemittel eingesetzt werden, beziehen sich die vorstehenden Mischungsverhältnisse vorzugsweise auf den gesamten Harzfestkörper.

Zu als Vernetzer geeigneten Aminharzen zählen beispielsweise alkylierte Kondensate, die durch Umsetzung von Aminotriazinen und Amidotriazinen mit Aldehyden hergestellt werden. Nach bekannten technischen Verfahren werden Amine oder Aminogruppen tragende Verbindungen wie Melamin, Guanamin, Acetoguanamin, Benzoguanamin, Dicyandiamid oder Harnstoff in Gegenwart von Alkoholen, wie Methanol, Ethanol, Propanol, Butanol oder Hexanol mit Aldehyden, insbesondere Formaldehyd, kondensiert. Die Reaktivität derartiger Aminharze wird bestimmt durch den Kondensationsgrad, das Verhältnis der Amin- bzw. Amidkomponenten zu Formaldehyd und durch die Art des verwendeten Veretherungsalkohols. Beispiele für derartige Harze und ihre Herstellung werden in "Houben-Weyl, Methoden der organischen Chemie" 1963, Seite 357, beschrieben. Diese Produkte sind im Handel geläufig.

Als Vernetzungsmittel können auch blockierte Polyisocyanate eingesetzt werden. Es können bei der Erfindung beliebige Polyisocyanate benutzt werden, bei denen die Isocyanatgruppen mit einer Verbindung umgesetzt worden sind, so daß das gebildete blockierte Polyisocyanat gegenüber Hydroxylgruppen und Wasser bei Raumtemperatur beständig ist, bei erhöhten Temperaturen, beispielsweise im Bereich von etwa 90 bis etwa 250°C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis etwa 36, insbesondere etwa 8 bis 15 Kohlenstoffatome enthalten. Beispiele für geeignete Diisocyanate sind die vorstehend als Komponente b) genannten Diisocyanate.

Bevorzugt werden Polyisocyanate von höherer Isocyanatfunktionalität, wie die vorstehend unter b) genannten verwendet. Beispiele dafür sind Tris-(4-isocyanatophenyl)-methan, 1,3,5-Triisocyanatobenzol, 2,4,6-Triisocyanatotoluol, 1,3,5-Tris-(6-Isocyanatohexan)-biuret, Bis-(2,5-diisocyanato-4-methyl-phenyl)-methan und polymere Polyisocyanate, wie Dimere und Trimere von Diisocyanatotoluol. Ferner kann man auch Mischungen von Polyisocyanaten benutzen.

Die bei den erfindungsgemäßen Überzugsmitteln als Vernetzungsmittel in Betracht kommenden organischen Polyisocyanate können auch Prepolymere sein, die sich beispielsweise von einem Polyol ableiten. Dazu werden in üblicher Weise Polyole mit einem Überschuß von Polyisocyanaten umgesetzt, wodurch Prepolymere mit endständigen Isocyanatgruppen entstehen.

Die blockierten Polyisocyanate, die erfindungsgemäß als Vernetzer eingesetzt werden können, können mit üblichen flüchtigen einwertigen Blokkierungsmitteln blockiert sein, wie sie in der Lackchemie eingesetzt werden. Beispiele hierfür sind verschiedene Alkohole, Oxime, Phenole, NH-funktionelle Stickstoffheterocyclen, wie Pyrazolderivate oder Triazolderivate, Amine, beta-Ketoverbindungen und Phthalimid. Die Polyisocyanate können in einem Molekül mit gleichen oder verschiedenen Blokkierungsmitteln blockiert sein. Als Vernetzer können auch Gemische unterschiedlich blockierter Polyisocyanate verwendet werden sowie auch Polyisocyanate, die intramolekular unterschiedlich blockiert sind.

Weiterhin können die erfindungsgemäßen Überzugsmittel dem Fachmann bekannte Polymerikroteilchen enthalten. Es können vernetzte oder unvernetzte Mikroteilchen eingesetzt werden. Beispiele für solche Polymermikroteilchen sind in der EP-A-0 038 127 und EP-A-0 234 362 beschrieben.

Weiterhin können die Überzugsmittel lacktechnische Additive enthalten, beispielsweise rheologiebeeinflussende Mittel, wie hochdisperse Kieselsäure, anorganische Schichtsilikate oder polymere Harnstoffverbindungen. Als Verdicker wirken auch beispielsweise wasserlösliche Celluloseether wie Hydroxyethylcellulose, Methylcellulose oder Carboxymethylcellulose, sowie synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid oder Ethylen-Maleinsäureanhydrid-Copolymere und ihre Derivate oder auch hydrophob modifizierte ethoxylierte Polyurethane oder Polyacrylate. Daneben können auch Antiabsetzmittel, Verlaufsmittel, Lichtschutzmittel, Antischaummittel, wie beispielsweise silikonhaltige Verbindungen; Netzmittel sowie haftvermittelnde Substanzen eingesetzt werden. Unter Netzmittel werden auch bekannte Pastenharze verstanden, die zum besseren Dispergieren und Vermahlen der Pigmente eingesetzt werden können. Zum Beschleunigen der Härtung können gegebenenfalls Katalysatoren eingesetzt werden, es ist jedoch auch möglich durch thermische Energie ohne Einsatz eines Katalysators zu härten.

Als in geringen Mengen vorhandene Lösemittel sind übliche lacktechnische Lösemittel geeignet, diese können von der Herstellung der Bindemittel stammen oder werden separat zugegeben. Beispiele für solche Lösemittel sind ein- oder mehrwertige Alkohole, z.B. Propanol, Butanol, Hexanol; Glykolether oder -ester, z.B. Diethylenglykoldialkylether, Dipropylenglykoldialkylether, jeweils mit C₁-₆-Alkyl, Ethoxypropanol, Butylglykol; Glykole z.B. Ethylenglykol; Propylenglykol, und dessen Oligomere, N-Methylpyrrolidon sowie Ketone wie Methylethylketon, Aceton, Cyclohexanon; aromatische oder aliphatische Kohlenwasserstoffe, z.B. Toluol, Xylol oder C₆ - C₁₂ lineare oder verzweigte aliphatische Kohlenwasserstoffe.

Über die Auswahl der Lösemittel kann der Verlauf sowie die Viskosität des Überzugsmittels beeinflußt werden. Über den Siedepunkt der eingesetzten Lösungsmittelmischung kann das Abdunstverhalten beeinflußt werden.

Die erfindungsgemäßen Überzugsmittel können ein oder mehrere anorganische und/oder organische farb- und/oder effektgebende Pigmente und gegebenenfalls zusätzlich mindestens einen Füllstoff enthalten.

Beispiele für effektgebende Pigmente sind Metallpigmente, z.B. aus Aluminium, Kupfer oder anderen Metallen; Interferenzpigmente wie z.B. metalloxidbeschichtete Metallpigmente, z.B. titandioxidbeschichtetes Aluminium, beschichtete Glimmer wie z.B. titandioxidbeschichteter Glimmer und Graphiteffektpigmente. Beispiele für farbgebende Pigmente und Füllstoffe sind Titandioxid, mikronisiertes Titandioxid, Eisenoxidpigmente, Ruß, Siliciumdioxid, Bariumsulfat, mikronisierter Glimmer, Talkum, Kaolin, Kreide, Azopigmente, Phthalocyaninpigmente, Chinacridonpigmente, Pyrrolopyrrolpigmente, Perylenpigmente.

Die Effektpigmente werden im allgemeinen in Form einer handelsüblichen wäßrigen oder nicht-wäßrigen Paste vorgelegt, gegebenenfalls mit bevorzugt wasserverdünnbaren, organischen Lösemitteln und Additiven versetzt und danach mit dem wäßrigen Bindemittel unter Scheren vermischt. Pulverförmige Effektpigmente können zunächst mit bevorzugt wasserverdünnbaren organischen Lösemitteln und Additiven zu einer Paste verarbeitet werden. Es ist darauf zu achten, daß die plättchenförmigen Effektpigmente beim Vermischen nicht mechanisch beschädigt werden.

Farbpigmente und/oder Füllstoffe können beispielsweise in einem Teil des wäßrigen Bindemittels angerieben werden. Bevorzugt kann das Anreiben auch in einem speziellen wasserverdünnbaren Pastenharz geschehen. Ein Beispiel für ein im erfindungsgemäßen Wasserbasislack bevorzugt einsetzbares Pastenharz auf Polyurethanbasis findet sich in der DE-A-40 00 889. Das Anreiben kann in üblichen, dem Fachmann bekannten Aggregaten erfolgen. Danach wird mit dem restlichen Anteil des wäßrigen Bindemittels oder des wäßrigen Pastenharzes zur fertigen Farbpigmentanreibung komplettiert.

Sind im Überzugsmittel Pastenharze vorhanden, so addieren sich diese bei der Berechnung des Harzfestkörpers zu Bindemittel plus gegebenenfalls vorhandenem Vernetzer.

Ist der erfindungsgemäße wäßrige Lack auf Basis der bevorzugten anionisch stabilisierten, über Siloxanbrücken kettenverlängerten PU-Dispersion formuliert, so enthält er Basen als Neutralisationsmittel. Beispiele sind Ammoniak oder organische Amine wie Triethylamin, N-Methylmorpholin, Aminoalkohole wie Dimethylisopropanolamin, Dimethylethanolamin, 2-Amino-2-methylpropanol-1.

Die erfindungsgemäßen Überzugsmittel werden bevorzugt als Wasserbasislacke formuliert, wie sie für Mehrschichtlackierungen eingesetzt und mit transparenten Klarlacken überlackiert werden. Ein solcher Wasserbasislack besitzt beispielsweise einen Festkörpergehalt von 10 - 50 Gew.-%, für Effektbasislacke liegt er beispielsweise bevorzugt bei 15 - 30 Gew.-%, für unifarbige Basislacke liegt er bevorzugt höher, beispielsweise bei 20 - 45 Gew.-%. Das Verhältnis von Pigment zu Bindemittel plus gegebenenfalls Vernetzer plus gegebenenfalls Pastenharz im Wasserbasislack beträgt beispielsweise zwischen 0,03 : 1 bis 3 : 1, für Effektbasislacke liegt es beispielsweise bevorzugt bei 0,06 : 1 bis 0,6 : 1, für unifarbige Basislacke liegt es bevorzugt höher, beispielsweise bei 0,06 : 1 bis 2,5 :1, jeweils bezogen auf das Festkörpergewicht.

Der Lösemittelanteil der erfindungsgemäßen Wasserbasislacke beträgt bevorzugt unter 20 Gew.-%, besonders bevorzugt unter 15 Gew.-%, insbesondere bevorzugt unter 10 Gew.-%.

Erfindungsgemäße Wasserbasislacke können nach üblichen Methoden appliziert werden. Bevorzugt werden sie durch Spritzen in einer Trockenschichtdicke von 8 bis 50 µm appliziert, für Effektbasislacke liegt die Trockenschichtdicke beispielsweise bevorzugt bei 10 bis 25 µm, für unifarbige Basislacke liegt sie bevorzugt höher, beispielsweise bei 10 bis 40 µm. Die Applikation erfolgt bevorzugt im Naß-in-Naß-Verfahren, d.h. nach einer Ablüftphase, z.B. bei 20 - 80°C, werden die Wasserbasislackschichten mit einem üblichen Klarlack in einer Trockenschichtdicke von bevorzugt 30 - 60 µm überlackiert und gemeinsam mit diesem bei Temperaturen von beispielsweise 20 bis 140°C getrocknet oder vernetzt. Die Trocknungsbedingungen der Decklackschicht (Basislack und Klarlack) richten sich nach dem verwendeten Klarlacksystem. Sie können beispielsweise bei 20 bis 150°C liegen. Für Reparaturzwecke sind beispielsweise Temperaturen von 20 bis 80°C bevorzugt. Für Zwecke der Serienlackierung sind Temperaturen über 100°C, beispielsweise über 110°C bevorzugt.

Als Klarlack sind grundsätzlich alle bekannten Klarlacke oder transparent pigmentierten Überzugsmittel geeignet. Hierbei können sowohl lösungsmittelhaltige 1- oder 2-Komponenten-Lacke, wasserverdünnbare Klarlacke, Pulverklarlacke oder durch Strahlung härtbare Klarlacke eingesetzt werden.
So erstellte Mehrschichtlackierungen können auf verschiedenste Arten von Substraten aufgebracht werden. Im allgemeinen handelt es sich um metallische oder Kunststoff-Untergründe. Diese sind häufig vorbeschichtet, d.h. Kunststoffsubstrate können z.B. mit einer Kunststoffgrundierung versehen sein, metallische Substrate besitzen im allgemeinen eine elektrophoretisch aufgebrachte Grundierung und gegebenenfalls zusätzlich eine oder mehrere weitere Lackschichten, wie z.B. eine Füllerschicht (Primer-Surfacer). Diese Schichten sind im allgemeinen ausgehärtet. Der erfindungsgemäße Wasserbasislack kann jedoch auch auf unvernetzte Füllerschichten wie z.B. in EP-A-0 238 037 beschrieben, naß-in-naß appliziert werden. In diesem Falle wird der Basislack im allgemeinen vor Auftrag einer Klarlackdeckschicht gemeinsam mit der Füllerschicht eingebrannt.

Es ist auch möglich den erfindungsgemäßen Wasserbasislack direkt, ohne weitere Zwischenschichten auf eine eingebrannte oder nicht-eingebrannte Elektrotauchlackschicht zu applizieren, wie dies auch für andere bekannte Basislacke auf Lösemittelbasis oder Wasserbasis möglich ist.

Die erfindungsgemäßen Überzugsmittel sind auch hervorragend geeignet zur Lackierung anderer Substrate, insbesondere mineralischer Substrate, wie Beton, Holz, sowie zur Beschichtung von Folien (Kunststoff- und Papierfolien) und zum Herstellen dünner Schichten zum Verkleben von mehreren Substraten.

Die mit den erfindungsgemäßen Polyurethanharzdispersionen formulierten Überzugsmittel zeichnen sich durch eine gute Lagerstabilität aus. Die Wasserverdünnbarkeit der Dispersion ist unproblematisch; der Bedarf an Colösemitteln ist gering. Die erfindungsgemäß formulierten Überzugsmittel weisen bei der Spritzapplikation ein vorzügliches Zerstäubungsverhalten auf. Bei der Herstellung von Mehrschichtaufbauten ergibt sich eine sehr gute Zwischenhaftung. Bei der Formulierung von Metalliclacken erzielt man gute Metalliceffekte, auch wenn die erfindungsgemäße Polyurethandispersion als Alleinbindemittel in Wasserbasislacken eingesetzt wird.

Mit erfindungsgemäßen Wasserbasislacken erhaltene Mehrschichtlackierungen entsprechen den heute üblichen Anforderungen in der Kraftfahrzeuglackierung. Erfindungsgemäße Wasserbasislacke sind somit geeignet für die Fahrzeugerstlackierung und -reparaturlackierung, sie können jedoch auch in anderen Bereichen, z.B. der Kunststofflackierung, insbesondere der Fahrzeugteilelackierung, eingesetzt werden.

Die Erfindung betrifft weiterhin ein Substrat, beschichtet mit einem Mehrschichtüberzug, der erhalten worden ist durch Aufbringen mindestens einer Grundierungsschicht, bevorzugt auf Basis eines wasserverdünnbaren Überzugsmittels, Aufbringen einer farbgebenden Basislackschicht mit einem erfindungsgemäßen Überzugsmittel, gegebenenfalls Trocknen der Basisschicht und Aufbringen eines transparenten Überzugsmittels als Deckschicht und anschließende Erhitzung des beschichteten Substrates. Es können zu dieser Mehrschichtlackierung gegebenenfalls weitere zusätzliche Schichten hinzugefügt werden.

Die erfindungsgemäße Mehrschichtlackierung weist eine gute Oberfläche auf. Die Haftung zwischen den Schichten und der Basislackschicht ist gut und zeigt auch bei Belastung im Feuchtraumklima keine Enthaftungsstörungen. Die Erfindung eignet sich besonders zur Verwendung in der Automobillackierung (Serien- und Reparaturlackierung).

Unter Verwendung von erfindungsgemäßen Wasserbasislacken, die als Bindemittel die über Siloxanbrücken kettenverlängerten PU-Dispersionen enthalten, hergestellte Mehrschichtlackierungen zeichen sich durch eine hervorragende Beständigkeit gegenüber Schwitzwasserbelastung aus.

Effekt-Wasserbasislacke, die die über Siloxanbrücken kettenverlängerten PU-Dispersionen als Alleinbindemittel enthalten, eignen sich zur Erzeugung von Mehrschichtlackierungen mit verbesserter Effektausbildung im Vergleich zu entsprechenden Effektlackierungen, die unter Verwendung von PU-Dispersionen des Standes der Technik als Alleinbindemittel enthaltenden Effektwasserbasislacken hergestellt werden können.

### Herstellungsbeispiel 1:

339 g eines Polyesters aus Adipinsäure, Hexandiol und Isophthalsäure (OH-Zahl 104) und 19 g Dimethylolpropionsäure werden in 160 g N-Methylpyrrolidon gelöst und auf 40°C erwärmt. Danach werden 125 g Isophorondiisocyanat so zugegeben, daß eine Reaktionstemperatur von 80°C nicht überschritten wird. Es wird so lange gehalten, bis ein NCO-Gehalt von 2 % (bezogen auf Festharz) bestimmt nach DIN 53 185 erreicht ist.

Danach werden nacheinander 14,6 g 3-Aminopropyltriethoxysilan und 16,2 g Di-ethanolamin zugegeben.

Die Reaktionsmischung wird solange bei 80°C gehalten bis keine freien NCO-Gruppen mehr nachweisbar sind (Titration). Zur Neutralisation wird eine Mischung von 12,6 g Triethylamin und 12,6 g deionisiertem Wasser zugegeben und gut eingearbeitet.

Nach Zugabe von 583,4 g vollentsalztem Wasser erhält man eine feinteilige wäßrige Polyurethandispersion.

| Kennwerte | |
|---|---|
| Festkörper 30'150°C | 40,1 |
| Säurezahl ü FK | 15,9 |
| MEQ-Amin/100 g Festharz | 26,1 |
| pH-Wert | 7,8 |
| mittlere Teilchengröße | 89 nm |

### Herstellungsbeispiel 2:

339 g eines Polyesters aus Adipinsäure, Hexandiol und Isophthalsäure (OH-Zahl: 104) und 19 g Dimethylolpropionsäure werden in 160 g N-Methylpyrrolidon gelöst und auf 40°C erwärmt. Danach werden 125 g Isophorondiisocyanat so zugegeben, daß eine Reaktionstemperatur von 80°C nicht überschritten wird. Es wird so lange gehalten bis ein NCO-Gehalt von 2 % (bezogen auf Festharz) bestimmt nach DIN 53 185 erreicht ist. Danach werden nacheinander 43,8 g 3-Amino-propyltriethoxysilan und 2,3 g Diethanolamin zugegeben. Die Reaktionsmischung wird so lange bei 80°C gehalten bis keine freien NCO-Gruppen mehr nachweisbar sind (Titration). Zur Neutralisation wird eine Mischung von 12,6 g Triethylamin und 12,6 g deionisiertem Wasser zugegeben und gut eingearbeitet.

Nach der Zugabe von 583,4 g vollentsalztem Wasser erhält man eine feinteilige wäßrige Polyurethandispersion.

| Kennwerte | |
|---|---|
| Festkörper 30'150°C | 39,6 |
| Säurezahl ü FK | 16,0 |
| MEQ-Amin/100 g Festharz | 25,4 |
| pH-Wert | 7,8 |
| mittlere Teilchengröße | 101 nm |

### Herstellungsbeispiel 3:

339 g eines Polyesters aus Adipinsäure, Hexandiol und Isophthalsäure (OH-Zahl: 104) und 19 g Dimethylolpropionsäure werden in 160 g N-Methylpyrrolidon gelöst und auf 40°C erwärmt. Danach werden 125 g Isophorondiisocyanat so zugegeben, daß eine Reaktionstemperatur von 80°C nicht überschritten wird. Es wird so lange gehalten bis ein NCO-Gehalt von 2 % (bezogen auf Festharz) bestimmt nach DIN 53 185 erreicht ist. Danach werden 42 g 3-Aminopropylmethyldiethoxysilan zugegeben.

Die Reaktionsmischung wird so lange bei 80°C gehalten bis keine freien NCO-Gruppen mehr nachweisbar sind (Titration). Zur Neutralisation wird eine Mischung von 12,6 g Triethylamin und 12,6 g deionisiertem Wasser zugegeben und gut eingearbeitet. Nach der Zugabe von 583,4 g vollentsalztem Wasser erhält man eine feinteilige wäßrige Polyurethandispersion.

| Kennwerte | |
|---|---|
| Festkörper 30'150°C | 40,4 |
| Säurezahl ü FK | 16,2 |
| MEQ-Amin/100 g Festharz | 26,5 |
| pH-Wert | 7,2 |
| mittlere Teilchengröße | 73 nm |

### Herstellungsbeispiel 4:

339 g eines Polyesters aus Adipinsäure, Hexandiol und Isophthalsäure (OH-Zahl: 104) und 19 g Dimethylolpropionsäure werden in 160 g N-Methylpyrrolidon gelöst und auf 40°C erwärmt. Danach werden 118,3 g Trimethyl-hexamethylen-diisocyanat so zugegeben, daß eine Reaktionstemperatur von 80°C nicht überschritten wird. Es wird so lange gehalten bis ein NCO-Gehalt von 2 % (bezogen auf Festharz) bestimmt nach DIN 53 185 erreicht ist.

Danach werden nacheinander 33,6 g 3-Aminopropylmethyldiethoxysilan und 4,6 g Diethanolamin zugegeben. Die Reaktionsmischung wird so lange bei 80°C gehalten bis keine freien NCO-Gruppen mehr nachweisbar sind (Titration). Zur Neutralisation wird eine Mischung von 10,9 g N,N-Dimethylisopropanolamin und 10,9 g deionisiertem Wasser zugegeben und gut eingearbeitet. Nach der Zugabe von 585,1 g vollentsalztem Wasser bei 60°C erhält man eine feinteilige wäßrige Polyurethandispersion.

| Kennwerte | |
|---|---|
| Festkörper 30'150°C | 39,6 |
| Säurezahl ü FK | 16,5 |
| MEQ-Amin/100 g Festharz | 24,9 |
| pH-Wert | 8,0 |
| mittlere Teilchengröße | 124 nm |

### Herstellungsbeispiel 5:

339 g eines Polyesters aus Adipinsäure, Hexandiol und Isophthalsäure (OH-Zahl: 104) und 19 g Dimethylolpropionsäure werden in 160 g N-Methylpyrrolidon gelöst und auf 40°C erwärmt. Danach werden 125 g Isophorondiisocyanat so zugegeben, daß eine Reaktionstemperatur von 80°C nicht überschritten wird. Es wird so lange gehalten bis ein NCO-Gehalt von 2 % (bezogen auf Festharz) bestimmt nach DIN 53 185 erreicht ist. Danach werden 35,4 g 3-Aminopropyldimethylethoxysilan zugegeben.

Die Reaktionsmischung wird solange bei 80°C gehalten bis keine freien NCO-Gruppen mehr nachweisbar sind (Titration). Zur Neutralisation wird eine Mischung von 14,5 g Triethylamin und 14,5 g deionisiertem Wasser zugegeben und gut eingearbeitet. Nach der Zugabe von 581,5 g vollentsalztem Wasser erhält man eine feinteilige wäßrige Polyurethandispersion.

| Kennwerte | |
|---|---|
| Festkörper 30'150°C | 40,3 |
| Säurezahl ü FK | 16,4 |
| MEQ-Amin/100 g Festharz | 28,8 |
| pH-Wert | 8,4 |
| mittlere Teilchengröße | 62 nm |

### Herstellungsbeispiel 6:

346 g eines Polycaprolactondiols (OH-Zahl: 102) und 19 g Dimethylolpropionsäure werden in 160 g N-Methylpyrrolidon gelöst und auf 40°C erwärmt. Danach werden 138 g 1,3-Bis(1-isocyanato-1-methylethyl)-benzol (TMXDI) so zugegeben, daß eine Reaktionstemperatur von 100°C nicht überschritten wird. Es wird so lange gehalten bis ein NCO-Gehalt von 2 % (bezogen auf Festharz) bestimmt nach DIN 53 185 erreicht ist. Danach werden nacheinander 43,8 g 3-Aminopropyltriethoxysilan und 2,3 g Di-ethanolamin zugegeben.

Die Reaktionsmischung wird so lange bei 80°C gehalten bis keine freien NCO-Gruppen mehr nachweisbar sind (Titration). Zur Neutralisation wird eine Mischung von 12,6 g Triethylamin und 12,6 g deionisiertem Wasser zugegeben und gut eingearbeitet.

Nach Zugabe von 609,4 g vollentsalztem Wasser erhält man eine feinteilige wäßrige Polyurethandispersion.

| Kennwerte | |
|---|---|
| Festkörper 30'150°C | 39,8 |
| Säurezahl ü FK | 15,2 |
| MEQ-Amin/100 g Festharz | 23,4 |
| pH-Wert | 7,1 |
| mittlere Teilchengröße | 112 nm |

### Herstellungsbeispiel 7:

a) Herstellung eines carboxyfunktionellen, epoxidgruppenhaltigen Polymeren:
   In eine Lösung von 141 g eines Polyesters (OHZ = 88), hergestellt auf der Basis von Phthalsäureanhydrid, Isophthalsäure, Maleinsäureanhydrid, Propanol und Glycerin, wie in der DE-OS 28 11 913 beschrieben, in 70 g Methylethylketon, wurden 100 g eines Anhydridgemisches (SZ/H₂0 = 486), hergestellt durch Umsetzung von Trimellithsäureanhydrid mit Propandiol-1,2, bestehend somit aus Trimellithsäureanhydrid und Anhydriden der nachstehenden Formeln 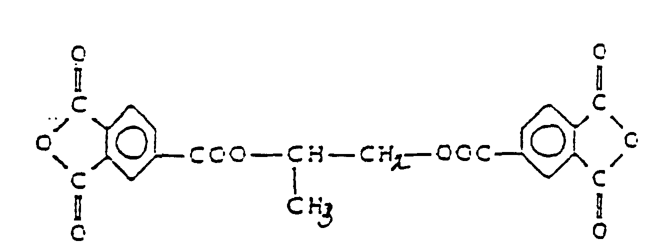 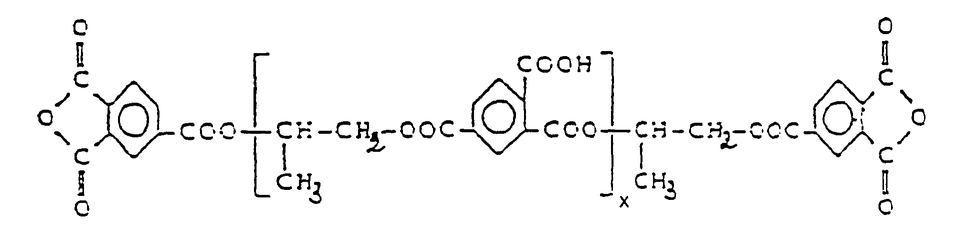 x = 1 bis 8
   die in 108 g Xylol bei 50°C homogenisiert worden waren, innerhalb 1 Stunde zugetropft. Bei 90°C wurde so lange gerührt, bis das Reaktionsgemisch eine Säurezahl von Wasser von 165 (100 %iges Harz) erreicht hatte. Danach wurden 12 g Wasser zugemischt und nach 6-stündigem Rühren bei 80 bis 90°C eine Säurezahl in Butanol von 168 (100 %iges Harz) erreicht. Die Gemischtemperatur wurde auf 60°C gesenkt und nach Zugabe von 0,3 g Lithiumbenzoat 132 g eines epoxydierten Leinöls (Epoxidzahl = 8,7) innerhalb von 2 Stunden zugetropft und die Mischung so lange gerührt, bis die Säurezahl in Butanol auf 86,5 abgesunken war. Anschließend wurde eine Mischung von 42 g Dimethylamin (60 %ig in Wasser) in 860 g Wasser eingerührt. Es wurde eine hellgelbe, opaleszierende Lösung erhalten, aus der bei 0,1 bar und 40°C das organische Lösungsmittel abdestilliert wurde. Nach Filtration wurde eine gelbliche, praktisch klare wäßrige Harzlösung erhalten. Festkörpergehalt: 32 % (1 Stunde bei 125°C).
b) Herstellung der Polymerisatdispersion
   In einen Reaktor, ausgerüstet mit Rührer, Rückflußkühler, Innenthermometer und Dosiervorrichtung für die Monomeren, sowie den Initiator, wurden 705 g der vorstehenden wäßrigen (32 %igen) Dispersion und 196 g Wasser gefüllt. Diese Mischung wurde unter Rühren auf 80°C erwärmt und eine Lösung von 0,5 g Ammoniumperoxydisulfat in 35 g Wasser zugesetzt. 5 Minuten nach der Zugabe des Initiators wurden 35 g einer Monomerenmischung aus 125 g Methylmethacrylat, 94 g n-Butylacrylat und 17 g Glycidylmethacrylat zugesetzt und nach weiteren 15 Minuten Vorpolymerisation wurde die verbliebene Monomermenge über 2 Stunden zudosiert. 10 Minuten nach Beendigung der Zugabe wurden weitere 0,2 g Ammoniumperoxydisulfat, gelöst in 10 g Wasser, innerhalb von 10 Minuten zugesetzt und der Ansatz noch 2 Stunden bei 80°C gerührt, um vollständigen Umsatz zu erzielen. Es resultierte eine stabile wäßrige Dispersion mit ca. 40 % Feststoffgehalt.

### Herstellungsbeispiel 8:

a) Herstellung eines carboxyfunktionellen, epoxidgruppenhaltigen Polymeren:
   In eine Lösung von 127 g eines Polyesters (OHZ = 107) in 70 g Methylethylketon wurden 100 g Anhydrid-Gemisch (SZ/H₂0 = 560), hergestellt durch Umsetzung von Trimellithsäureanhydrid mit Propandiol-1,2, die in 30 g Aceton bei 50°C homogenisiert waren, innerhalb einer Stunde zugetropft. Bei 90°C wurde so lange gerührt, bis das Reaktionsgemisch eine Säurezahl in Wasser von 197 (bezogen auf 100 %iges Harz) erreicht hatte. Danach wurden noch 15 g Wasser zugemischt. Nach 6-stündigem Rühren bei 80 bis 90°C betrug die Säurezahl in Butanol 180 (100 %iges Harz). Die Gemischtemperatur wurde auf 60°C gesenkt und 133 g eines epoxidierten Leinöls (Epoxyzahl = 8,9) innerhalb von 2 Stunden zugetropft.
   Die Mischung wurde so lange gerührt, bis die Säurezahl in Butanol auf 90 abgesunken war. Danach wurde eine Mischung von 56 g Dimethylaminoethanol in 540 g Wasser eingerührt. Es wurde eine hellgelbe, opaleszierende Lösung erhalten, aus der bei 0,1 bar und 40°C das organische Lösungsmittel abdestilliert wurde. Nach Filtration wurde eine gelbliche, praktisch klare wäßrige Harzlösung erhalten. Festkörpergehalt (1 h bei 125°C) ca. 39 %.
b) Herstellung der Polymerisatdispersion
   355 g der (39 %igen) wäßrigen Dispersion aus 1a) wurden in einem Reaktor, der mit Rührer, Rückflußkühler, Innenthermometer und Dosiervorrichtungen für die Monomeren sowie den Initiator ausgerüstet war, mit 452 g Wasser gemischt, die Mischung unter Rühren auf 80°C erwärmt und eine Lösung von 0,5 g Ammoniumperoxydisulfat in 35 g Wasser zugesetzt. 5 Minuten nach der Zugabe des Initiators wurden 35 g einer Monomerenmischung aus 165 g Methylmethacrylat, 142 g n-Butylacrylat und 24 g Hydroxyethylacrylat zugesetzt und nach weiteren 15 Minuten Vorpolymerisation die verbliebene Monomermenge über 2 Stunden zudosiert. 10 Minuten nach Beendigung der Zugabe wurden weitere 0,2 g Ammoniumperoxydisulfat, gelöst in 10 g Wasser, innerhalb von 10 Minuten zugesetzt und der Ansatz noch 2 Stunden bei 80°C gerührt, um vollständigen Umsatz zu erzielen. Es resultierte eine stabile wäßrige Dispersion mit ca. 40 % Feststoffgehalt.

### Herstellungsbeispiel 9:

### Herstellung eines Pastenharzes

In einem Reaktionsgefäß mit Innenthermometer und Rückflußkühler werden 1395 g eines linearen gesättigten Polyesters (aufgebaut aus Adipinsäure und Hydroxypivalinsäureneopentylglykolester) mit einer OH-Zahl von 112 und einer Viskosität (bei 25°C) von 8,7 Pas unter gutem Rühren mit 161 g Dimethylolpropionsäure und 163 g Trimethylolpropan zum Lösen auf 90°C erwärmt und dann auf 50°C abgekühlt. Nach Zusatz von 865 g Tetramethylxylylendiisocyanat wird langsam auf 120°C erwärmt, bis der NCO-Gehalt unter 0,2 % liegt. Danach wird mit 861 g Methoxypropanol verdünnt.

| | |
|---|---|
| Festkörper (30 min 150°C) | 75 Gew.-% |
| Säurezahl (bezogen auf Festkörper) | 27 |
| Viskosität bei 25°C, mit Methoxypropanol auf 40 % verdünnt | 210 mPa.s* |

Auf 1963 g dieser Harzlösung werden ein Gemisch aus 58,3 g Dimethylethanolamin und 58,3 g Wasser schnell zugegeben und auf 80°C erwärmt. Danach langsam mit Wasser verdünnen zu einer trüben, in der Wärme gut verarbeitbaren hochviskosen Paste mit folgenden Kennzahlen:

| | |
|---|---|
| Festkörper (30 min. 150°C) | 32,3 Gew.-% |
| Viskosität bei 25°C | 1,3 Pas* |
| MEQ-Wert | 42 |
| pH-Wert | 7,6 |

| | |
|---|---|
| * gemessen in einem Rotationsviskosimeter mit koaxialer Zylindereinrichtung nach DIN 53 018 und 53 019 nach 5 min. Scheren bei einem Schergefälle von 231 Sek.⁻¹. | |

### Herstellung der Komponenten für die folgenden Lackbeispiele

### Herstellungsbeispiel 10:

### Herstellung einer Bindemittellösung

| | |
|---|---|
| 50,00 g | des vorstehend unter Herstellungsbeispiel 7 beschriebenen wasserverdünnbaren Bindemittels werden mit |
| | |
| 43,94 g | vollentsalztem Wasser und |
| 6,00 g | Butoxyethanol vermischt und mit |
| 0,06 g | N-Dimethylaminoethanol auf einen pH-Wert von 6,2 - 6,4 eingestellt. |

### Herstellungsbeispiel 11:

### Herstellung einer Aluminiumanteigung

| | |
|---|---|
| 20,50 g | einer handelsüblichen Aluminiumpaste mit einem Metallgehalt von 65 % werden mit einer Mischung aus |
| | |
| 7,00 g | Butoxyethanol und |
| 15,50 g | vollentsalztem Wasser gut verrührt und anschließend mit einer Mischung aus |
| 4,00 g | des vorstehend unter Herstellungsbeispiel 7 und zusätzlich |
| 4,50 g | des unter Herstellungsbeispiel 2 beschriebenen Bindemittels, |
| 10,00 g | Butoxyethanol, |
| 34,70 g | vollentsalztem Wasser und |
| 3,00 g | eines handelsüblichen sauren Acrylatverdickers versetzt. Mit einer Mischung aus |
| 0,08 g | N-Dimethylaminoethanol und |
| 0,72 g | vollentsalztem Wasser wird auf einen pH-Wert von 6,2 - 6,4 eingestellt. |

### Herstellungsbeispiel 12:

### Herstellung einer blauen Pigmentanreibung

Mit Hilfe eines Dissolvers werden

| | |
|---|---|
| 10,00 g | Cu-Phthalocyaninpigment in |
| 17,00 g | eines handelsüblichen Hexamethoxymelaminharzes und |
| 10,00 g | Butoxyethanol vordispergiert und nach Zusatz von weiteren |
| 5,00 g | des Melaminharzes und |
| 10,00 g | Butoxyethanol mit einer Perlmühle ausdispergiert. Danach wird mit einer Mischung aus |
| 0,90 g | eines handelsüblichen sauren Acrylatverdickers und |
| 18,91 g | vollentsalztem Wasser versetzt und mit |
| 2,00 g | N-Dimethylaminoethanol und |
| 26,19 g | vollentsalztem Wasser auf pH 7,1 - 7,3 eingestellt. |

### Herstellungsbeispiel 13:

### Herstellung einer grünen Pigmentanreibung

| | |
|---|---|
| 20,00 g | eines chlorierten Phthalocyaninpigmentes werden mit einem Dissolver in einer Mischung aus |
| 20,00 g | des vorstehend unter Herstellungsbeispiel 9 beschriebenen Bindemittels, |
| 35,00 g | Butoxyethanol und |
| 0,50 g | N-Dimethylaminoethanol vordispergiert und anschließend auf einer Perlmühle ausdispergiert. Danach wird die Mischung mit |
| 24,50 g | vollentsalztem Wasser verdünnt. |

### Herstellungsbeispiel 14:

Es wurde gearbeitet, wie im Herstellungsbeispiel 10 beschrieben, jedoch unter Verwendung des unter Herstellungsbeispiel 8 beschriebenen Bindemittels (50,00 g).

### Herstellungsbeispiel 15:

Es wurde gearbeitet, wie im Herstellungsbeispiel 11 beschrieben, jedoch unter Verwendung des unter Herstellungsbeispiel 8 beschriebenen Bindemittels (4,00 g), zusammen mit dem unter Herstellungsbeispiel 2 beschriebenen Bindemittel (4,50 g).

### Beispiele für Lackformulierungen

### Beispiel 1

### 1.1 Herstellung eines wasserverdünnbaren, blauen Metallicbasislackes

| | |
|---|---|
| 30,00 g | der in Herstellungsbeispiel 10 beschriebenen Bindemittellösung werden mit |
| 19,00 g | der in Herstellungsbeispiel 11 beschriebenen Aluminiumanteigung, |
| 1,90 g | saurem Acrylat-Verdicker (wie vorstehend verwendet), |
| 17,44 g | vollentsalztem Wasser und |
| 0,25 g | N-Dimethylaminoethanol für eine Dauer von 30 Minuten gerührt. |

In diese Mischung werden

| | |
|---|---|
| 25,50 g | der unter Herstellungsbeispiel 6 beschriebenen Polyurethandispersion eingerührt und die in Herstellungsbeispiel 12 beschriebene Pigmentanreibung wird in einer Menge von |
| 0,94 g | zugesetzt. Anschließend werden unter Rühren |
| 4,00 g | n-Butanol zugegeben und mit |
| 0,96 g | Wasser auf eine Viskosität von 90 - 95 mPa.s bei einem Schergefälle von 100 sec⁻¹ eingestellt. |

Festkörpergehalt: 18,0 Gew.-% (120 Minuten in einem Umlufttrockenofen bei 120°C).

### 1.2 Aufbringen des Basislackes und eines Klarlackes

Auf ein in üblicher Weise mit Zn-phosphatierung, Elektrotauchlack und Spritzgrund vorbehandeltes Blech wird der in 1.1 beschriebene Basislack mit einer Druckluft-zerstäubenden Spritzpistole so aufgetragen, daß in zwei Auftragsschichten eine Gesamttrockenfilmstärke von 15 µm erreicht wird. Die Bedingungen bei der Applikation des Basislackes sind 23°C Umgebungstemperatur und 60 % relative Luftfeuchtigkeit. Nach der Applikation wird das beschichtete Blech in einem Umlufttrockenofen 5 Minuten bei 50°C forciert getrocknet und nach dem Abkühlen auf 23°C in üblicher Weise mit einem handelsüblichen Acryl-Melaminharz-Klarlack überschichtet und 30 Minuten bei 130°C eingebrannt.

Man erhält so eine gleichmäßige wolkenfreie Beschichtung mit einem ausgezeichneten Metalliceffekt, sehr hohem Glanz und hervorragender Beständigkeit gegen Schwitzwasser.

### Beispiel 2

### 2.1 Herstellung eines wasserverdünnbaren silberfarbenen Metallicbasislackes

Analog zu Beispiel 1.1 wird ein silberfarbener Basislack hergestellt aus

| | |
|---|---|
| 40,00 g | der in Herstellungsbeispiel 14 beschriebenen Bindemittellösung, |
| 19,00 g | der in Herstellungsbeispiel 15 beschriebenen Aluminiumanteigung, |
| 1,90 g | saurem Acrylatverdicker, |
| 0,26 g | N-Dimethylaminoethanol, |
| 22,00 g | Polyurethandispersion (gemäß Herstellungsbeispiel 2), |
| 4,00 g | n-Butanol und |
| 12,84 g | vollentsalztem Wasser. |

Der Festkörpergehalt beträgt 18,0 Gew.-% (120 Minuten im Umlufttrockenofen bei 120°C). Die Viskosität liegt bei 90 - 95 mPa.s bei einem Schergefälle von 100 sec⁻¹.

### 2.2 Aufbringen des Basislackes und eines Klarlackes

Wie in Beispiel 1.2 beschrieben, wird ein vorbehandeltes Blech mit Basislack beschichtet und 5 Minuten bei 50°C forciert getrocknet. Nach dem Abkühlen wird mit einem handelsüblichen Zweikomponenten-Acryl-Isocyanat-Klarlack überschichtet und 30 Minuten bei 130°C eingebrannt.

Die so erhaltene Beschichtung zeichnet sich durch eine hohe Brillanz, absolut gleichmäßige wolkenfreie Effektausbildung, ausgeprägten Metalliceffekt und hervorragende Beständigkeit gegen Schwitzwasser.

### Beispiel 3

### 3.1 Herstellung eines wasserverdünnbaren grünen Metallicbasislackes

Der Basislack wird analog Beispiel 1.1 hergestellt aus

| | |
|---|---|
| 59,00 g | Bindemittellösung nach Herstellungsbeispiel 10 |
| 18,50 g | Aluminiumanteigung nach Herstellungsbeispiel 11 |
| 1,90 g | saurem Acrylatverdicker, |
| 0,26 g | N-Dimethylaminoethanol, |
| 4,80 g | Polyurethandispersion nach Herstellungsbeispiel 4 |
| 0,60 g | der in Herstellungsbeispiel 13 beschriebenen grünen Pigmentanreibung, |
| 4,00 g | n-Butanol und |
| 10,94 g | vollentsalztem Wasser. |

- Festkörpergehalt:: 17,1 Gew.-% (120 Minuten im Umluftofen bei 120°C),
- Viskosität:: 90 - 95 mPa.s bei einem Schergefälle von 100 sec⁻¹.

### 3.2 Aufbringen des Basislackes und eines Klarlackes

Wie in Beispiel 1.2 beschrieben, wird der Basislack aus 3.1 auf einem vorbehandelten Blech appliziert und nach der forcierten Trocknung mit einem handelsüblichen Acryl-Melamin-Klarlack überschichtet und bei 130°C 30 Minuten eingebrannt. Es resultiert eine grüne Metallicbeschichtung mit gleich gutem Eigenschaftsbild wie in den Beispielen 1.2 und 2.2.

### Beispiel 4

### 4.1 Herstellung eines unifarbenen, roten Basislackes

300 g eines üblichen Pastenharzes (gemäß Beispiel aus DE-OS 4 000 889) werden mit 350 g eines handelsüblichen Küpenpigmentes (Colourindex Red 168) vermischt. Mit Dimethylethanolamin wird auf pH 8,5 und durch Zugabe von deionisiertem Wasser auf einen Festkörper von 50 Gew.-% eingestellt. Danach wird in einer Perlmühle transparent ausdispergiert.

### 4.2

1,4 g eines handelsüblichen Verdickers auf Polyacrylsäurebasis (Festkörper: 10 Gew.-%, pH-Wert 7,5) werden mit 129 g der Dispersion aus Beispiel 1 und 40 g des Pastenharzes aus Beispiel 4.1 gemischt. Anschließend werden unter Rühren 24 g eines handelsüblichen, wasserunlöslichen Melaminharzes (Setamine US 138/BB 70 der Firma AKZO) unter Rühren zugesetzt. Anschließend werden 10 g der Rotpaste aus Beispiel 4.1 zugesetzt und homogen eingerührt. Mit deionisiertem Wasser wird eine Applikationsviskosität von 100 - 130 mPa.s, rotationsviskosimetrisch gemessen bei einem Schergefälle von 231 sec⁻¹ und bei 25°C eingestellt.

### 4.3 Aufbringen des Basislackes und eines Klarlackes

Der erhaltene Wasserbasislack wird auf ein übliches, phosphatiertes und durch kathodische Tauchlackierung und mit Füller vorbeschichtetes Karosserieblech durch Spritzen aufgebracht. Dies geschieht in einer Trockenschichtdicke von 30 µm. Nach der Applikation wird bei Raumtemperatur 10 Minuten abgelüftet und anschließend 10 Minuten bei 80°C vorgetrocknet. Anschließend wird ein handelsüblicher, melaminharzhärtender Autoserienklarlack auf Acrylatharzbasis in einer Trockenschichtdicke von 35 µm überlackiert und 18 Minuten bei 120°C (Objekttemperatur) getrocknet.

Man erhält eine Mehrschichtlackierung mit hervorragender Schwitzwasserbeständigkeit (DIN 50 017, 240 Stunden, 40°C).

### Beispiel 5

### Herstellung einer Silber-Metallic-Zweischichtlackierung

20 g einer handelsüblichen, für Wasserbasislack geeigneten Aluminiumpaste mit 65 Gew.-% Aluminium, 20 g Butylglykol, 6 g N-Methylpyrrolidon und 1 g eines handelsüblichen Netzmittels werden miteinander zum Bronzeaufschluß vermischt. Danach werden 1,4 g eines handelsüblichen Verdickers auf Polyacrylsäurebasis (Festkörper: 10 Gew.-%, pH-Wert 7,5) hinzugemischt. Danach werden 129 g der Dispersion aus Beispiel 1 und 40 g des Pastenharzes aus Beispiel 4.1 in den Bronzeaufschluß eingerührt.

Anschließend werden unter Rühren 24 g eines handelsüblichen, wasserunlöslichen Melaminharzes (Setamine US 138/BB 70 der Firma Akzo) unter Rühren zugesetzt. Mit deionisiertem Wasser wird eine Applikationsviskosität von 100 - 130 mPa.s, rotationsviskosimetrisch gemessen bei einem Schergefälle von 231 s⁻¹ und bei 25°C, eingestellt.

Der erhaltene Wasserbasislack wird auf ein übliches, phosphatiertes und durch kathodische Tauchlackierung und mit Füller vorbeschichtetes Karosserieblech durch Spritzen aufgebracht. Dies geschieht in einer Trockenschichtdicke von 15 µm. Nach der Applikation wird bei Raumtemperatur 10 Minuten abgelüftet und anschließend 10 Minuten bei 80°C vorgetrocknet. Anschließend wird ein handelsüblicher, melaminharzhärtender Autoserienklarlack auf Acrylatharzbasis in einer Trockenschichtdicke von 35 µm überlackiert und 18 Minuten bei 120°C (Objekttemperatur) getrocknet.

Man erhält eine Mehrschichtlackierung mit absolut gleichmäßiger wolkenfreier Effektausbildung, ausgeprägtem Metalliceffekt und hervorragender Beständigkeit gegen Schwitzwasser.

## Patentansprüche

1. Verwendung wäßriger Überzugsmittel, enthaltend eine wäßrige Dispersion eines oder mehrerer Polyurethanharze mit einem Zahlenmittel der Molmasse (Mn) von 2500 bis 1000000, einem Gehalt von 2 bis 150 mmol Siloxanbrücken (-Si-0-Si-) pro 100 g Festharz, einer Hydroxylzahl von 0 bis 100 und einem Gehalt an ionischen, in ionische Gruppen überführbaren und/oder hydrophilen Gruppen von 5 bis 200 mEqu pro 100 g Festharz, als farb- und/oder effektgebende Basislacke in Mehrschichtlackierungen, in denen eine Basislackschicht ausgebildet und mit einer transparenten Klarlackschicht überlackiert wird.

2. Verwendung nach Anspruch 1, **dadurch gekennzeichnet, daß** die wäßrige Dispersion erhältlich ist durch Kettenverlängerung eines ionische Gruppen, zur Ionenbildung befähigte Gruppen und/oder hydrophile Gruppen enthaltenden Polyurethan-Prepolymeren, das mindestens eine Gruppen R'OSi- aufweist, worin
R' = C₁ - bis C₈-Alkyl oder C(0)R''' und
R''' = C₁ - C₁₀-Alkyl
das in Gegenwart von organischem Lösemittel vorliegen kann, durch Zugabe von Wasser in mindestens stöchiometrischer Menge zur Hydrolyse der Si0R'-Gruppen und Überführung des gegebenenfalls neutralisierten Reaktionsprodukts in eine wäßrige Dispersion unter Zusatz von Wasser während oder nach der Kettenverlängerung und gegebenenfalls Abdestillieren von vorhandenem Lösemittel.

3. Verwendung nach Anspruch 1 oder 2, **dadurch gekennzeichnet, daß** das wäßrige Überzugsmittel ein oder mehrere Lösemittel und/oder lackübliche Additive enthält.

4. Verwendung nach einem der Ansprüche 1 bis 3, **dadurch gekennzeichnet, daß** das wäßrige Überzugsmittel ein oder mehrere Formaldehydkondensationsharze und/oder blockierte Polyisocyanate als Vernetzer enthält.

5. Verwendung nach einem der Ansprüche 1 bis 4, **dadurch gekennzeichnet, daß** das wäßrige Überzugsmittel zusätzlich ein oder mehrere weitere Bindemittel in einer Menge bis zu 50 Gew.-%, bezogen auf die Summe der Festkörpergewichte aller Bindemittel und Vernetzer enthält.

6. Verwendung nach einem der Ansprüche 1 bis 5 bei der Serienlackierung und Reparaturlackierung industrieller Gegenstände, sowie von Kraftfahrzeugen und deren Teilen.

## Claims

1. Use of aqueous coating compositions containing an aqueous dispersion of one or more polyurethane resins having a number-average molar mass (Mn) of from 2500 to 1,000,000, a content of from 2 to 150 mmol of siloxane bridges (-Si-O-Si-) per 100 g of solid resin, a hydroxyl number of from 0 to 100 and a content of ionic groups, groups that can be converted into ionic groups, and/or hydrophilic groups of from 5 to 200 mEqu per 100 g of solid resin, as colour- and/or effect-giving base lacquers in multi-layer lacquer coatings in which a base lacquer layer is formed and is covered with a transparent clear lacquer layer.

2. Use according to claim 1, **characterised in that** the aqueous dispersion is obtainable by chain lengthening of a polyurethane pre-polymer that contains ionic groups, groups capable of ion formation, and/or hydrophilic groups, that has at least one group R'OSi- wherein
R' = C₁- to C₈-alkyl or C(O)R''' and
R' ' ' = C₁-C₁₀-alkyl
and that may be in the presence of organic solvent, by addition of water in an at least stoichiometric amount for the hydrolysis of the SiOR' groups and conversion of the optionally neutralised reaction product into an aqueous dispersion with addition of water during or after the chain lengthening and, optionally, removal of any solvent present by distillation.

3. Use according to either claim 1 or claim 2, **characterised in that** the aqueous coating composition contains one or more solvents, and/or additives conventionally employed in lacquers.

4. Use according to any one of claims 1 to 3, **characterised in that** the aqueous coating composition contains one or more formaldehyde condensation resins and/or blocked polyisocyanates as crosslinking agent.

5. Use according to any one of claims 1 to 4, **characterised in that** the aqueous coating composition additionally contains one or more further binders in an amount of up to 50 wt.%, based on the sum of the solids weights of all binders and crosslinking agents.

6. Use according to any one of claims 1 to 5 in the series lacquering and repair lacquering of industrial articles, as well as of motor vehicles and parts thereof.

## Revendications

1. Utilisation de revêtements aqueux, contenant une dispersion aqueuse d'une ou de plusieurs résines de polyuréthane ayant une masse molaire moyenne en nombre (Mn) de 2500 à 1000000, une concentration de 2 à 150 mmol de ponts siloxane (-Si-O-Si-) pour 100 g de résine solide, un indice d'hydroxyle de 0 à 100 et une concentration en groupes ioniques, transformables en groupes ioniques et/ou hydrophiles de 5 à 200 méqu. pour 100 g de résine solide, comme laques de base colorantes et/ou à effets en laquages multicouches, dans lesquelles on forme une couche de laque de base et on la recouvre d'une couche de vernis transparent.

2. Utilisation selon la revendication 1, **caractérisée en ce que** la dispersion aqueuse qu'on peut obtenir par allongement de chaîne d'un prépolymère de polyuréthane contenant des groupes ioniques, des groupes capables de former des ions et/ou des groupes hydrophiles, qui présente au moins un groupe RO'Si-, dans lequel
R' = un groupe alkyle en C₁ à C₈ ou C(O)R"' et
R"' = un groupe alkyle en C₁ à C₁₀,
qui peut se présenter en présence d'un liant organique, par addition d'eau dans une quantité au moins stoechiométrique pour l'hydrolyse des groupes SiOR' et transformation du produit de réaction éventuellement neutralisé en une dispersion aqueuse en ajoutant de l'eau pendant ou après l'allongement de chaîne et éventuellement distillation du solvant présent.

3. Utilisation selon la revendication 1 ou 2, **caractérisée en ce que** le revêtement aqueux contient un ou plusieurs solvants et/ou additifs usuels des laques.

4. Utilisation selon une des revendications 1 à 3, **caractérisée en ce que** le revêtement aqueux contient une ou plusieurs résines de condensation avec le formaldéhyde et/ou polyisocyanates bloqués comme agents de réticulation.

5. Utilisation selon une des revendications 1 à 4, **caractérisée en ce que** le revêtement aqueux contient en plus un ou plusieurs autres liants en une quantité de jusqu'à 50 % en poids, par rapport à la somme des poids des matières solides de tous les liants et agents de réticulation.

6. Utilisation selon une des revendications 1 à 5, pour le laquage en série et le laquage de réparation d'objets industriels, ainsi que de camions et de leurs pièces détachées.
